(19) Europäisches Patentamt
European Patent Office
Office européen des brevets

(11) EP 3 790 725 B1

(12) EUROPEAN PATENT SPECIFICATION

(45) Date of publication and mention of the grant of the patent:
**14.01.2026 Bulletin 2026/03**

(21) Application number: **19727206.5**

(22) Date of filing: **10.05.2019**

(51) International Patent Classification (IPC):
***B29C 64/106*** (2017.01) ***B29C 64/393*** (2017.01)
***B33Y 80/00*** (2015.01) ***B33Y 10/00*** (2015.01)
***B33Y 50/02*** (2015.01)

(52) Cooperative Patent Classification (CPC):
**B29C 64/106; B29C 64/393; B33Y 10/00; B33Y 50/02; B33Y 80/00**

(86) International application number:
**PCT/US2019/031765**

(87) International publication number:
**WO 2019/217848 (14.11.2019 Gazette 2019/46)**

(54) **METHOD OF FORMING A THREE-DIMENSIONAL (3D) ARTICLE**

VERFAHREN ZUM FORMEN EINES DREIDIMENSIONALEN (3D) ARTIKELS

PROCÉDÉ DE FORMATION D’UN ARTICLE TRIDIMENSIONNEL (3D)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2018 US 201862669474 P**

(43) Date of publication of application:
**17.03.2021 Bulletin 2021/11**

(73) Proprietors:
- **Dow Silicones Corporation**
  **Midland, MI 48686-0994 (US)**
- **The Regents Of The University Of Michigan**
  **Ann Arbor, Michigan 48109 (US)**

(72) Inventors:
- **PLOTT, Jeffrey**
  **Ann Arbor, Michigan 48109-2590 (US)**
- **SHIH, Albert J.**
  **Ann Arbor, Michigan 48109-2590 (US)**
- **ZHU, Bizhong**
  **Midland, Michigan 48686-0994 (US)**

(74) Representative: **Murgitroyd & Company**
**165-169 Scotland Street**
**Glasgow G5 8PL (GB)**

(56) References cited:
**WO-A1-2018/013372 US-A1- 2017 052 516**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 790 725 B1

## Description

### CROSS-REFERENCE TO RELATED APPLICATIONS

This application claims priority to and all advantages of U.S. Provisional Application No. 62/669,474, filed on 10 May 2018.

### FIELD OF THE INVENTION

The present invention generally relates to a method of preparing a three-dimensional (3D) article and, more specifically, to a method of preparing a 3D article with deformable filaments via a 3D printer and to the 3D article formed thereby.

### DESCRIPTION OF THE RELATED ART

3D printing or additive manufacturing (AM) is a process of making three-dimensional (3D) solid objects, typically from a digital file. The creation of a 3D printed object is achieved using additive processes rather than subtractive processes. In an additive process, an object is created by laying down successive layers of material until the entire object is created. Each of these layers can be seen as a thinly sliced horizontal cross-section of the eventual 3D printed object.

Additive processes have been demonstrated with certain limited types of materials, such as organic thermoplastics (e.g. polylactic acid (PLA) or acrylonitrile butadiene styrene (ABS)), plaster, clay, room temperature vulcanization (RTV) materials, paper, or metal alloys. These materials are unsuitable in certain end applications based on physical or chemical limitations, cost, slow solidification (or cure) times, improper viscosity, etc.

US2017052516 A1 discloses a method including obtaining first model data specifying a first three-dimensional (3D) model of a first object and obtaining second model data specifying a second 3D model of a second object. WO2018013372 A1 discloses methods, systems, and devices for improving dimensional accuracy in generating a three dimensional (3D) object. In one aspect, first data may be received, for example from a first sensor, with the first data corresponding to at least a first dimension or measurement of a filament extrudable by a 3D printer.

### BRIEF SUMMARY

The present invention provides a method of forming a three-dimensional article as recited in claim 1.

### BRIEF DESCRIPTION OF THE DRAWINGS

Other advantages of the present invention will be readily appreciated, as the same becomes better understood by reference to the following detailed description when considered in connection with the accompanying drawings wherein:

Figure 1 is a schematic view of one embodiment of an apparatus and a nozzle for carrying out the disclosed method;
Figure 2A-D are free-body diagrams of four volumetric flow rate-dependent scenarios contemplated by the disclosed method;
Figure 3 is a schematic view of one embodiment of another apparatus and a nozzle for carrying out the disclosed method;
Figure 4 is a volumetric flow rate-dependent tangential force diagram of Examples 1-9 prepared in accordance with the disclosed method and described herein;
Figure 5 is a volumetric flow rate-dependent normal force diagram of Examples 1-9 prepared in accordance with the disclosed method and described herein;
Figure 6 is a composite of still images taken during and after preparation of Examples 10-13 in in accordance with the disclosed method and described herein; and
Figure 7 is a picture of a 3D article of Example 14 prepared in accordance with the disclosed method and described herein.

### DETAILED DESCRIPTION OF THE INVENTION

The invention is defined by the claims and any other aspects, configurations or embodiments set forth herein not falling within the scope of the claims are for information only. The present invention provides a method of forming a three-dimensional (3D) article. The 3D article is formed with independently selected compositions, which are described below,

along with various aspects relating to the 3D article formed in accordance with the method disclosed herein. The 3D article may be customized for myriad end use applications and industries. For example, as described below, the 3D article may be soft and/or flexible and utilized in actuating applications (e.g. as a pneumatic actuator). Alternatively or in addition, the 3D article may be a rigid structure utilized in construction applications. Further still, the 3D article may be utilized in biological and/or health care applications. The method of the invention may be utilized with different types of compositions to prepare different types of 3D articles with various properties, which can be customized based on desired end use application.

As described in greater detail below, the method of the invention is a 3D printing process that includes reduced, eliminated, or selectively controlled deformation forces, which otherwise would prevent the utilization of the independently selected compositions described herein (or would otherwise result in 3D articles having undesirable aesthetics and properties). Generally, the method utilizes deformable substrates, filaments, and layers to form 3D articles with structures of increased intricacy (e.g. increased heights, decreased thicknesses, increased pattern complexity) and decreased distortion. These and other features will be understood in view of the description and examples herein.

The method comprises (I) printing a first composition on a deformable substrate with a nozzle of an apparatus.

Various types of nozzles, apparatuses (e.g. 3D printers) and/or 3D printing methodologies (i.e., "3D printing processes") can be utilized, as described in detail below. As also described below, various types of compositions can be utilized in the method, which may be the same as or different from one another and are independently selected. The first composition may be curable or otherwise capable of solidification upon application of a solidification condition, as described below in regards to suitable compositions for use in the method.

The apparatus is suitable for use in "additive manufacturing" (AM) or "3D printing" processes (i.e., is a "3D printer"). Accordingly, this disclosure refers to ASTM Designation F2792 - 12a, "Standard Terminology for Additive Manufacturing Technologies." Under this ASTM standard, "3D printer" is defined as "a machine used for 3D printing" and "3D printing" is defined as "the fabrication of objects through the deposition of a material using a print head, nozzle, or another printer technology". Likewise, "additive manufacturing" is defined as "a process of joining materials to make objects from 3D model data, usually layer upon layer, as opposed to subtractive manufacturing methodologies. Synonyms associated with and encompassed by 3D printing include additive fabrication, additive processes, additive techniques, additive layer manufacturing, layer manufacturing, and freeform fabrication". AM may also be referred to as rapid prototyping (RP). As used herein, "3D printing" is generally interchangeable with "additive manufacturing" and vice versa.

In general, 3D printing encompasses myriad types of specific AM processes, which are typically referred to or classified based on a particular class of 3D printer utilized in the 3D printing process. Examples of these specific types of 3D printing processes include direct extrusion additive manufacturing, liquid additive manufacturing, fused filament fabrication, fused deposition modeling, direct ink deposition, material jetting, polyjetting, syringe extrusion, laser sintering, laser melting, stereolithography, powder bedding (binder jetting), electron beam melting, laminated object manufacturing, laser powder forming, ink-jetting, and the like. Such processes may be used independently or in combination in the method of this disclosure. 3D printers include extrusion additive manufacturing printers,liquid additive manufacturing printers, fused filament fabrication printers, fused deposition modeling printers, direct ink deposition printers, selective laser sintering printers, selective laser melting printers, stereolithography printers, powder bed (binder jet) printers, material jet printers, direct metal laser sintering printers, electron beam melting printers, laminated object manufacturing deposition printers, directed energy deposition printers, laser powder forming printers, polyjet printers, ink-jetting printers, material jetting printers, and syringe extrusion printers.

The apparatus may comprise a 3D printer selected from a fused filament fabrication printer, a fused deposition modeling printer, a direct ink deposition printer, a liquid additive manufacturing printer, a material jet printer, a polyjet printer, a material jetting printer, and a syringe extrusion printer.

Additionally, the 3D printer may be independently selected during each printing step associated with the disclosed method. Said differently, if desired, each printing step may utilize a different 3D printer or combinations of 3D printers. Different 3D printers may be utilized to impart different characteristics with respect to filaments and/or layers formed therewith, and different 3D printers may be particularly well suited for use with different types of compositions.

As the various types of 3D printing, and thus 3D printers, have substantial overlap with one another, e.g. based on a type of compositions and/or equipment utilized, 3D printers not specifically listed herein may also be utilized without departing from the scope of this disclosure. As such, the method of this disclosure can mimic (i.e., relate to) any one of the aforementioned 3D printing processes, or other 3D printing processes understood in the art. Specific examples of suitable 3D printing processes are also described in U.S. Pat. Nos. 5,204,055 and 5,387,380.

As introduced above, regardless of its selection, the method utilizes the apparatus, e.g. the 3D printer, including the nozzle. However, other printing technology components, elements, or devices (e.g. physical and/or electronic) may be incorporated or used in conjunction with the apparatus and the nozzle. Examples of such components, elements, or devices include extruders, printing bases/platforms (e.g. stationary and/or motion controlled printing bases/platforms), various sensors/detectors (e.g. cameras, laser displacement sensors), computers and/or controllers, and the like, which may each be used independently or as part of a system (e.g. with the components in electronic communication with one another). Likewise, 3D printing is generally associated with a host of related technologies used to fabricate physical objects

from computer generated data sources. Some of these specific processes are included above with reference to specific 3D printers. Further, some of these processes, and others, are described in greater detail below. Accordingly, many components and technologies may be utilized in connection with the method of this disclosure, as will be better understood in view of the general description of 3D printing process below.

In general, 3D printing processes have a common starting point, which is a computer generated data source or program which may describe an object. The computer generated data source or program can be based on an actual or virtual object. For example, an actual object can be scanned using a 3D scanner to give scan data, and the scan data can be used to make the computer generated data source or program. Alternatively, the computer generated data source or program may be designed from scratch, e.g. wholly or in combination with scan data.

The computer generated data source or program is typically converted into a standard tessellation language (STL) file format; however, other file formats can also or additionally be used. The file is generally read into 3D printing software, which takes the file and optionally user input to separate it into hundreds, thousands or even millions of "slices". The 3D printing software typically outputs machine instructions, which may be in the form of G-code, which is read by the 3D printer to build each slice. The machine instructions are transferred to the 3D printer, which then builds the object layer-by-layer based on this slice information in the form of the machine instructions. Thicknesses of these slices may vary.

To affect the layer-by-layer printing, the nozzle and/or the build platform of the 3D printer generally moves in the X-Y (horizontal) plane before moving in the Z-axis (vertical) plane once each layer is complete. In this way, the object which becomes the 3D article is built one layer at a time from the bottom upwards. This process can use material for two different purposes, building the object and supporting overhangs in order to avoid extruding material into thin air. Alternatively, the nozzle moves in the vertical and horizontal planes simultaneously such that the layers are integrated and at least partially overlap in the Z-axis.

Optionally, the resulting objects may be subjected to different post-processing regimes, such as further heating, solidification, infiltration, bakeout, and/or firing. This may be done, for example, to expedite cure of any binder, to reinforce or form the 3D article from the object, to eliminate any curing/cured binder (e.g., by decomposition), to consolidate the core material (e.g., by sintering/melting), and/or to form a composite material blending the properties of powder and binder.

In various embodiments, the method of this disclosure mimics a conventional material extrusion process. Material extrusion generally works by extruding material (in this case, the first composition) through a nozzle to print one cross-section of an object, which may be repeated for each subsequent layer. The nozzle may be heated, cooled or otherwise manipulated during printing, which may aid in dispensing the particular composition.

The nozzle may comprise any dimension and be of any size and/or shape (e.g. conical or frusto-conical, pyramidal, rectangular, cylindrical, etc.). Typically, the dimensions of the nozzle are selected based on the particular apparatus, first composition, and any other compositions used to practice the method. One or more additional or supplemental nozzles may be used to practice the method in addition to the nozzle, with any of the one or more additional nozzles being selected based on any of the compositions being utilized, the particular layer being formed, the dimensions of the 3D article being formed, etc. For example, a plurality of nozzles may be utilized to print a particular composition (in series and/or simultaneously), or to print components to form a particular composition in situ.

The nozzle may comprise a body extending between a base, which is proximal and connected to the apparatus, and a tip, and defines a cavity extending therethrough. The nozzle typically comprises an internal diameter (di) of from 0.001 to 100 mm, such as from 0.05 to 1, from 0.05 to 7, from 0.1 to 10, from 1 to 10, from 0.05 to 10, from 0.05 to 50, or from 0.1 to 50 mm. The internal diameter (di) of the nozzle typically refers to the span of the cavity proximal the tip of the nozzle. However, the cavity may be any shape, such cylindrical, conical, rectangular, triangular, etc., and thus the nozzle may have multiple internal diameters, each measured at a different location along the body of the nozzle between the base and the tip. The internal diameter of the nozzle tip itself may be referred to with the designation "di", as described herein.

The deformable substrate is not limited and, subject to the further description below, may be any substrate that can directly support the 3D article during its method of forming, or indirectly support the 3D article by itself being supported (e.g. by a table, such that the deformable substrate itself need not have rigidity). The deformable substrate may be discontinuous or continuous, e.g. in thickness, composition, rigidity, flexibility, etc. The composition of the deformable substrate may vary, and may include various components and independently selected materials and/or compositions. General examples of suitable substrates include polymers such as silicones and other resins, metals, carbon fiber, fiberglass, and the like, as well as combinations thereof. Typically, the deformable substrate is formed from a substrate composition, e.g. by printing, as described below. Specific examples of the substrate composition are described further below.

The term "deformable" is used in the context of the deformable substrate in the conventional sense, i.e., to describe an ability to be re-shaped (i.e., deformed) upon application of a force (e.g. a deformation force). In this sense, the deformable substrate is characterized by a relatively low modulus as compared with the forces applied to it during the printing process, and an ability to change shape and/or size due to application of the deformation force, which may comprise a tensile (e.g. pulling, dragging) force, a compressive (e.g. pushing) force, a sheer force, a torsion (e.g. twisting, bending) force, or combinations thereof. As such, the deformable substrate may also be colloquially understood in the AM

art as a "soft" and/or "flexible" substrate, as will be best understood in view of the description and examples of the deformable substrate and the substrate composition herein

In particular embodiments, the deformable substrate comprises an initial layer comprising an initial filament formed by printing the curable composition on a base substrate. In some such embodiments, the method includes printing the curable composition on the base substrate to form an initial layer comprising the curable composition, thereby giving the deformable substrate. In these embodiments, the initial layer may comprise an initial filament formed of the curable composition during printing. Dimensions of the initial filament (e.g., size, shape, density, height, width, etc.) may be independently selected. Likewise, various physical and/or dimensional properties of the initial layer may be independently selected, and are typically controlled by the parameters selected during printing the initial filament (e.g., spacing between portions of the initial filament printed, a shape and/or size of the portions, etc.). The base substrate may be any object, such as a printing base, built plate, mold, etc., and may include a coating or other film disposed thereon. The base substrate may also be removable, e.g. peelable, from the deformable substrate printed thereon. Alternatively, the deformable substrate may physically and/or chemically bond to the base substrate, such that the 3D article formed by the method and the substrate are integral together. In one embodiment, the base substrate comprises a silicone substrate, e.g. an already cured silicone. In some embodiments, the base substrate comprises a cured resin. Examples of cured resins and cured silicones are described further below. Depending on a selection of the deformable substrate, the base substrate is optional. For example, deformable substrate may have sufficient viscosity or rigidity such that the deformable substrate is formed suspended in situ as the curable composition is dispensed from the 3D printer, in which case the deformable substrate is separate from and not in contact with any substrate.

In certain embodiments, the deformable substrate is uncured during (I) printing the first composition thereon. In such embodiments, the deformable substrate may have a skin over time and/or a cure time within which wet-on-wet printing may be performed. In some such embodiments, the method further includes printing the first composition on the deformable substrate within the skin over time and/or cure time (i.e., prior to the deformable substrate reaching a state of cure/hardness in which the deformable substrate is no longer deformable). In these embodiments, the method may further include forming the deformable substrate before printing the first composition thereon. The deformable substrate may be formed by printing (e.g. via a printing process as described herein) the substrate composition, which is described in further detail below

Ambient conditions may be manipulated or controlled during (I) printing the first composition. For example, if desired, the deformable substrate may be heated, cooled, mechanically vibrated, or otherwise manipulated before, during, and/or after the steps of printing to assist with solidification and/or curing. Further, the deformable substrate may be moved, e.g. rotated, during any printing step. Similarly, the nozzle, or a dispenser connected thereto, may be heated or cooled before, during, and after dispensing the first composition. Likewise, more than one dispenser may be utilized with each dispenser having independently selected properties or parameters. The method may be carried out in a heated and/or humidified environment such that solidification and/curing initiates after each step of printing.

During (I) printing the first composition, the nozzle and the deformable substrate are spaced a distance from one another in the Z-axis (vertical) plane, as measured from a top surface of the deformable substrate and the tip of the nozzle. This distance between the nozzle tip and the top surface of the deformable substrate is typically described as the "nozzle height", and may be referred to as such herein. It is to be understood that the top surface of the deformable substrate used to define and/or measure the nozzle height need not be located on a top-most portion of the deformable substrate in relation to the base substrate on which the deformable substrate is disposed. Rather, the surface of the top surface of the deformable substrate used to define and/or measure the nozzle height may be located on any portion of the deformable substrate, and is typically located on a portion of the deformable substrate on which the first layer has been printed, is being printed, or will be printed, e.g. depending when the nozzle height is measured during the method. For example, the nozzle height is typically measured at the beginning of the method as the distance, along the Z-axis, between the bottom-most portion of the nozzle tip and the portion of the deformable substrate on which the first composition will first be printed.

Typically, the nozzle height is chosen based on myriad factors, e.g. dimensions of the nozzle, selection of the first composition and its properties (including viscosity), desired size or shape of the deformable first filament, desired thickness of the first layer, the desired dimensions of the 3D article being formed, etc., as described below. In these or other embodiments, the nozzle height is a secondary parameter, i.e., is not itself selected, but rather is controlled by or linked to another selected (i.e., primary) printing parameter, as described below. Typically, the nozzle height is in the range of from 1 to 2000 mm, such as from 1 to 9, 1 to 99, 10 to 99, or 100 to 2000 mm. However, in some embodiments, the nozzle height varies (i.e., increases and/or decreases) during printing, e.g. based on another printing parameter, a real-time adjustment, etc. The nozzle height and/or speed may be measured and/or determined by any technique, such as via manual measurements (e.g. those utilizing a height gauge, ruler, etc.), optical measurements (e.g. those utilizing optical sensors, such as intensity-based sensors, triangulation-based sensors, time-of-flight-based sensors, Doppler sensors etc., scanning inferometry, fiber Bragg gratings, etc. ), and/or computation measurements (e.g. those utilizing 3D printing software), and the like, as well as combinations and/or modifications thereof.

At least one of the deformable substrate and the nozzle is moved in the X-Y (horizontal) plane at a speed relative

to the other during printing. This movement is typically achieved by one of the printing conditions described above, such as moving a printing platform on which the deformable substrate is disposed, moving the nozzle of the apparatus, or both. Though referencing movement of the deformable substrate and/or nozzle, this movement speed is typically described as the "nozzle speed", and may be referred to as such herein. Like the nozzle height, the nozzle speed may be a secondary parameter, i.e., is not itself selected, but rather is controlled by or linked to another selected (i.e., primary) printing parameter, as described below. Typically, the nozzle speed is in the range of from 1 to 200 mm/s, such as from 1 to 100, 5 to 150, 10 to 100, or 15 to 50 mm/s. However, in some embodiments, the nozzle speed varies (i.e., increases and/or decreases) during printing, e.g. based on another printing parameter, a real-time adjustment, etc.

The first composition is described in further detail herein, and is to be understood in view of the description and examples below relating to first composition itself as well as "the compositions" described further below. Generally, the first composition may be any composition suitable for use in forming a 3D article via printing.

The properties of the first composition may vary, and are typically dependent on the particular composition(s) utilized in the first composition. For example, the viscosity of the first composition may be any viscosity suitable for printing. Typically, the viscosity of the first composition is selected to provide the deformable first filament, as described below, a degree of self-support when formed on the substrate. As such, the viscosity of the first composition may be defined as a dynamic viscosity, which may be in the range of from 1000 to 100,000,000 centipoise (cP), such as from 30,000 to 5,000,000 cP, where 1 cP is equal to 1 mPa·s. For greater printing speed and interlayer adhesion, often it is desirable that the composition is "thixotropic". Viscosity values herein are at 25 °C unless otherwise expressly indicated. The viscosity of the first composition may be altered (i.e. increased or decreased) by heating or cooling the first composition, e.g. via heat transfer to or from the nozzle or the substrate, altering the ambient conditions, etc., as described below. Likewise, the elastic modulus of the first composition may vary, e.g. based on the particular printing parameters selected, the compositions employed, the 3D article to be formed, etc. Additionally, the elastic modulus of the first composition may change over time, e.g. due to curing, crosslinking, and/or hardening of the first composition, including during the method. Typically, the elastic modulus of the first composition is in the range of from 0.01 to 5000 MPa, such as from 0.1 to 1500, from 0.1 to 500, from 0.1 to 125, from 0.2 to 100, from 0.2 to 90, from 0.2 to 80, from 0.3 to 80, from 0.3 to 70, from 0.3 to 60, from 0.3 to 50, from 0.3 to 45, from 0.4 to 40, or from 0.5 to 10 MPa. These ranges may apply to the elastic modulus of the first composition at any time, such as before printing, during printing, and/or after printing. Moreover, more than one of such ranges may apply to the first composition, e.g. when the elastic modulus of the first composition may changes over time (e.g. during and/or after printing). In certain embodiments, the first composition has an elastic modulus of less than 120, alternatively less than 110, alternatively less than 100, alternatively less than 90, alternatively less than 80, alternatively less than 70, alternatively less than 60, alternatively less than 50, alternatively less than 40, alternatively less than 30 MPa during printing.

Typically, the properties of the first composition are selected such that the first composition comprises an ability to be deformed in response to an applied force (i.e., deformability) and an ability to undergo liquid and/or plastic flow (i.e., flowability) during printing. As described further below, such deformability and/or flowability characteristics may be selected (i.e., tuned), e.g. based on the particular components selected for use in or as the first composition. Additionally, the deformability and flowability of the first composition may change over time, e.g. due to curing, crosslinking, and/or hardening.

The first composition is passed through the cavity of the nozzle and expelled (e.g. extruded or dispensed) from the nozzle tip. Accordingly, the dimensions (i.e., cross sectional shape, height, width, diameter, etc.) of the first composition as printed are typically influenced and/or dictated by the perimeter shape and/or dimensions of the cavity. Likewise, the form of the first composition during printing may also be selected and influenced and/or dictated by the nozzle, as described in further detail below.

The first composition may be printed on the deformable substrate in any form. In some embodiments, the first composition is printed on the deformable substrate as a deformable first filament, such that the first layer formed therefrom comprises the deformable first filament. The term "filament" is used herein to describe a thread-like form, e.g. comprising one or more strands and/or fibers. However, as described below, each of such filaments, or combination of such filaments, may be formed, oriented, arranged, or otherwise disposed in various secondary and/or tertiary forms, as described below. Likewise, each filament may be continuous or discontinuous with respect to length, i.e., may be a single unbroken filament, or may comprise a plurality of separate filaments. For example, in certain embodiments, the deformable first filament may be continuous or discontinuous with respect to length. In other words, the deformable first filament may be a single unbroken filament, or may comprise a plurality of separate filaments. For purposes of clarity, the term "deformable first filament" is used herein to refer to the deformable first filament in its entirety, and extends to and encompasses both a single filament or a plurality of filaments comprising the first composition, which each may be independently selected and formed in the first layer, and are each typically deformable. Likewise, with respect to any other filaments described herein, the term "filament" itself may refer to, and thus encompasses, both a single filament or a plurality of filament comprising a composition (e.g. the first composition, or any other composition described herein).

As introduced above, the deformable first filament itself may comprise any form. For example, the deformable

first filament may be randomized, patterned, linear, non-linear, woven, non-woven, continuous, discontinuous, or may have any other form or combinations of forms. For example, the deformable first filament may be a mat, a web, or have other orientations. The deformable first filament may be patterned such that the first layer comprises the deformable first filament in a nonintersecting manner. For example, the deformable first filament may comprise a plurality of linear and parallel filaments or strands. Alternatively, the deformable first filament may intersect itself such that the first layer itself comprises a patterned or cross-hatched filament. The pattern or cross-hatching of the deformable first filament may present perpendicular angles, or acute/obtuse angles, or combinations thereof, at each intersecting point of the deformable first filament, which orientation may be independently selected at each intersecting point. Further still, the deformable first filament may contact and fuse or blend with itself such that portions of, alternatively the entirety of, the first layer is in the form of a film.

In certain embodiments, the deformable first filament may fuse with itself to define a void, alternatively a plurality of voids, in the first layer. Typically, however, the deformable first filament is formed on the deformable substrate such that voids between fusions are minimized or eliminated, and the first layer is free from, alternatively is substantially free from, voids. The void-filling ability of the deformable first filament may be influenced (i.e., selectively increased or decreased) by the particular components selected for use in the first composition (e.g. to influence the viscosity, flowability, etc. thereof), as described further below.

As introduced above, the first composition is passed through the cavity of the nozzle and expelled (e.g. extruded) from the nozzle tip. Accordingly, the overall shape of the cavity can, in conjunction with the elastic modulus of the first composition, influence and/or dictate dimensions of the deformable first filament formed from the first composition. For example, the nozzle may be a reducing tip (i.e., having a tip ID (di) less than a base ID), such that the fist composition is radially compressed while passed through the nozzle. In such instances, the viscoelastic properties of the first composition and the extrusion speed will dictate the degree to which the deformable first filament will decompress to an outer diameter greater than the tip ID (di) of the nozzle. Additionally, as described in further detail below, a shape of an outer portion of the nozzle (e.g. at the tip) may influence a dimension and/or shape of the deformable first filament, such as when the nozzle height is less than a height of the deformable first filament and the outer portion of the nozzle contacts a surface of the filament. In these instances, the nozzle may be used to deform (e.g. "smooth") an otherwise cylindrically-shaped first filament, e.g. to flatten the top thereof, to outwardly spread the deformable first filament (e.g. to fill voids adjacent thereto), etc.

By way of example, as shown in the embodiment of Figure 1, the apparatus 10 includes the nozzle 12, and a base substrate (e.g. a base plate) 20. The nozzle 12 defines an interior cavity 22, which comprises an internal diameter (di; 24). The nozzle 12 prints the first composition 14 onto the deformable substrate 18, which is located on the base substrate 20, to form the first filament 16. During printing the first composition 14, the nozzle 12 is spaced from the deformable substrate 18 by the distance 26.

During printing the first composition, known forces are applied to the deformable substrate in various modes, including from vibration and movement of the apparatus and/or build plate (if utilized) and gravity forces (e.g. acting directly on the deformable substrate), which are typically overcome through conventional methods of controlling accelerations, utilizing stationary build plates, and increasing the stiffness of the 3D-printer, as understood in the art. However, the present invention provides a method that includes reducing and/or eliminating tangential and normal forces applied to the deformable substrate (i.e., "deformation forces") which are shown herein to be caused by printing of the first composition thereon with the nozzle. When forming multiple successive layers, each prior layer can be considered a substrate for each subsequent layer, and thus the inventive method can be utilized advantageously with printing numerous successive layers while reducing and/or eliminating tangential and normal forces, which reduces and/or eliminates distortion of the layers and 3D article.

More specifically, it has been found that printing the first composition can apply tangential forces to the deformable substrate due to dragging and/or pulling of the deformable first filament between the deformable substrate and the nozzle tip. It has also been found that the momentum of the first composition during printing (e.g. as extruded from the nozzle) can apply normal forces to the deformable substrate. Moreover, it has also been found that additional tangential and normal forces that are caused by the outer portion of the nozzle (e.g. a side and/or bottom of the tip) contacting (e.g. dragging through) the first composition printed on the deformable substrate.

Without wishing to be bound by theory, it is believed that these deformation forces account for the failures and shortcomings of conventional methods in printing 3D articles on deformable substrates, printing 3D articles from soft and/or deformable materials, and printing intricate and complex structures using extrusion-based AM. More specifically, it is believed that these deformation forces skew structures printed on deformable substrates and/or with deformable filaments at certain levels, which in turn can cause the AM process to deteriorate and/or fail, the accuracy of the 3D article being formed to be lost, and the tensile strength of the 3D article being formed to be reduced. Moreover, it is known that these problems prevent the use of conventional methods in the formation of accurate, void-free 3D articles comprising soft materials. Accordingly, as will be understood from the description below, the method of this disclosure overcomes the limitations of such conventional methods, and utilizes deformable substrates, filaments, and layers to form accurately-printed 3D articles with structures of increased intricacy (e.g. increased heights, decreased thicknesses, increased pattern complexity) and decreased distortion. More specifically, the method includes reducing a deformation force applied by the nozzle to the deformable substrate (e.g. directly and/or via the first composition), while still providing for void-free layers and or 3D articles to be formed. In certain embodiments, the deformation force comprises the normal force described above. In these or other embodiments, the deformation force comprises the tangential force described above. In certain embodiments, the method includes reducing a deformation force comprising both of the tangential and normal forces described above

To reduce the deformation force applied by the nozzle to the deformable substrate, the method includes (II) controlling the volumetric flow rate at which the first composition is printed during (I) printing the first composition on the deformable substrate.

The term "volumetric flow rate" is used herein to describe a dimension (Q) of the first composition being printed in relation to the nozzle speed (v), the nozzle height (t), the spacing of adjacent obstructions (c) on the deformable substrate (e.g., filaments, limiters, implants, or other "walls" placed adjacent the area in which the first composition is being printed onto the deformable substrate). Typically, the adjacent obstructions are filaments formed during the method, and thus the spacing factor (c) is herein referred to as the adjacent line spacing (c). More specifically, the volumetric flow rate (Q) may be calculated as the nozzle speed (v) times the area to be filled, which is equal to the adjacent line spacing (c) times the nozzle height (t), as shown in Equation 1 below.

$$Q = ctv \quad \text{(Eq. 1)}$$

As such, (II) controlling the volumetric flow rate may comprise independently selecting particular values for the nozzle speed (v), the adjacent line spacing (c), the nozzle height (t), or a combination thereof. In certain embodiments, (II) controlling the volumetric flow rate (Q) comprises selectively controlling a shape of the deformable substrate, such as an edge profile, the adjacent line spacing (c), etc.

Typically, the first composition is not free-flowing and comprises a viscosity sufficient to render the first composition self-supporting, i.e. thixotropic. In such instances, in order to form a void-free layer and/or 3D article comprising the first composition, forming the first layer comprises compressing (e.g. applying a compressive force to) the first composition or first filament formed therefrom in order to spread the composition (e.g. laterally) and fill adjacent interstitial spaces. Accordingly, in certain embodiments the volumetric flow rate (Q) also includes a compression factor (X), as shown in Equation 2 below, to account for the required compressive force.

$$Xc = Q/tv \qquad (2)$$

Eq. (2) can also be re-written so that any value (c, t, v, Q), or combination thereof, may also be adjusted to achieve a given compression factor (X). Accordingly, it is to be understood that the compression factor (X) may be measured empirically or solved for mathematically based on known values of the volumetric flow rate (Q), the nozzle speed (v), the adjacent line spacing (c), and the nozzle height (t). As such, (II) controlling the volumetric flow rate (Q) may comprise adjusting any of the volumetric flow rate (Q), the nozzle speed (v), the adjacent line spacing (c), the nozzle height (t), and the compression factor (X), or any combination thereof. Accordingly, in certain embodiments, (II) controlling the volumetric flow rate (Q) comprises selectively controlling a flow rate (i.e., volume, velocity, etc.) at which the first composition is expelled from the nozzle during printing. In these or other embodiments, (II) controlling the volumetric flow rate (Q) comprises selectively controlling the nozzle height (t). In some embodiments, (II) controlling the volumetric flow rate (Q) comprises selectively controlling the nozzle speed (v). In certain embodiments, the compression factor (x) represents a ratio of the difference between the nozzle tip ID (di) and the nozzle height (t) to the nozzle tip ID (di). As such, (II) controlling the volumetric flow rate (Q) may comprise selectively controlling a dimension of the nozzle (e.g. size and/or shape, tip ID (di), etc.).

Typically, the compression factor (X) is in the range of 0.3 to 1.5. For example, in certain embodiments, the compression factor (X) is from 0.7 to 1.3, such as from 0.8 to 1.3, from 0.9 to 1.3, from 0.9 to 1.2, or from 1 to 1.1. However, it is to be appreciated that any value can be used for the compression factor (X), which typically depends on at least: (1) the deformability of the first composition (e.g. viscosity, elastic modulus, cure state, etc.); (2) the kinetic energy of the first composition as it leaves the nozzle; (3) an edge profile of overlapped printed filaments (e.g. extrusion lines); and (4) the area of the deformable substrate where the first composition is being deposited (i.e., printed). For example, a material (e.g. for use as the first composition) with a lower viscosity may require a lower compression factor (X) to achieve a voidless cross-section in layers formed therewith (all else equal), since such material will require less force to deform and fill adjacent interstitial spaces than a material having a higher viscosity. Additionally, if the nozzle tip ID (di) is reduced, or Q and v are increased proportionally, the exit velocity of the first composition will increase, potentially imparting a larger kinetic energy and greater deforming compression to the deformable substrate. Also, due to a lack of adjacent line

compression on edges of a layer, a separate adjustment of the adjacent line spacing (c) is required. In such instances, the adjacent line spacing is typically further defined as (and replaced by) $c_{edge}$, which is typically less than c. Similarly, when a composition (e.g. the deformable substrate, the first composition, etc.) is extruded against a rigid substrate (e.g. the base substrate, a hardened/cured layer, etc.), on its first layer, the composition is likely to deform more than a final top layer which is not compressed by additional layers thereon. In such cases, the volumetric flow rate (Q) may further comprise additional compression factors, which may be independently selected during (II) controlling the volumetric flow rate (Q).

As described above, printing the first composition with the nozzle imparts deformation forces to the deformable substrate. As such, in certain embodiments, (II) controlling the volumetric flow rate (Q) comprises reducing the volumetric flow rate (Q) of the first composition to reduce, alternatively minimize, alternatively eliminate contact between the outer portion of the nozzle (e.g. a side and/or bottom of the tip) and the deformable first filament formed on the deformable substrate. In these or other embodiments, (II) controlling the volumetric flow rate (Q) comprises increasing or decreasing the volumetric flow rate (Q) of the first composition to reduce, alternatively minimize, alternatively eliminate dragging and/or pulling of the deformable first filament between the deformable substrate and the nozzle tip. In certain embodiments, (II) controlling the volumetric flow rate (Q) comprises increasing or decreasing the volumetric flow rate (Q) of the first composition to reduce, alternatively minimize, the momentum of the first composition during printing the first composition on the deformable substrate.

By way of example, free body diagrams for four scenarios are shown in Figure 2A-D. In each scenario, the first composition 14 is printed onto the deformable substrate 18 with the nozzle 12 at volumetric flow rate (Q). During printing the first composition 14, the nozzle 12 is spaced from the deformable substrate 18 by nozzle height (t), and the nozzle 12 moves in a direction relative to the deformable substrate 18 at nozzle speed (v). Moving from scenarios 1-4, as shown in Figures 2A-D respectively, the volumetric flow rate (Q) is increased. In other words, across the four scenarios of Figure 2: the volumetric flow rate (Q) is further defined as a first volumetric flow rate (Q1) in Figure 2A; the volumetric flow rate (Q) is further defined as a second volumetric flow rate (Q2) in Figure 2B; the volumetric flow rate (Q) is further defined as a third volumetric flow rate (Q3) in Figure 2C; the volumetric flow rate (Q) is further defined as a fourth volumetric flow rate (Q4) in Figure 2D; and Q1 <Q2<Q3<Q4.

In the first scenario, as shown in Figure 2A, where the nozzle 12 prints the first composition 14 onto the deformable substrate 18 at the first volumetric flow rate (Q1), the nozzle 12 does not contact the first composition 14 once printed. In this scenario, the deformation force components include: $F_{ng}$, which is the normal force caused by the weight of the first composition 14; $F_{nd}$, which is the normal force caused by the first composition decelerating once printed; and $F_{td}$ , which is the tangential force caused by the nozzle 12 dragging and stretching the first composition 14 on the deformable substrate 18.

In the second scenario, as shown in Figure 2B, where the nozzle 12 prints the first composition 14 onto the deformable substrate 18 at the second volumetric flow rate (Q2), the nozzle 12 drags through the first composition 14 once printed, acting to flatten the top surface thereof. In this scenario, the three forces ($F_{ng}$, $F_{nd}$, $F_{td}$) that existed in the first scenario are present in addition to two additional forces: $F_{tn}$, which is the tangential force caused by the nozzle 12 moving through the first composition 14 once printed on the deformable substrate 18; and $F_{nn}$, which is the normal force caused by the nozzle 12 interacting with the first composition 14 once printed on the deformable substrate 18. As compared to the first scenario of Figure 2A, more of the first composition 12 is being printed in a given space in the second scenario (i.e., due to Q2>Q1), causing $F_{ng}$ to increase due to an increase in weight of the first composition 14, $F_{nd}$ to increase due to the greater momentum of the first composition 14 as it leaves the nozzle 12 and decelerates on the deformable substrate 18, and $F_{nd}$ to decrease since the first composition 14 will not be stretched as much by the movement of the nozzle 12 once printed.

In the third scenario, as shown in Figure 2C, where the nozzle 12 prints the first composition 14 onto the deformable substrate 18 at the third volumetric flow rate (Q3), the first composition 14 flows forward from the inner diameter of the nozzle 12 as it contacts the deformable substrate 18. This "outward push" of the first composition creates a flow field that leads in front of the opening of nozzle 12. Accordingly, in this third scenario, $F_{td}$ is theoretically 0 since the first composition 14 is no longer being stretched by the nozzle 12 during printing. Conversely, $F_{ng}$ and $F_{nd}$ are expected to increase (i.e., as compared to the second scenario shown in Figure 2B) for the same reasons described with regard to the second scenario above.

Finally, in the fourth scenario, as shown in Figure 2D, where the nozzle 12 prints the first composition 14 onto the deformable substrate 18 at the fourth, and highest, volumetric flow rate (Q4), the flow field has moved in front of the nozzle 12 itself (i.e., as compared to in front of the opening of the nozzle 12 as in the third scenario of Figure 2C), which causes the side of the nozzle 12 to drag through the first composition 14 in addition to the bottom surface of the nozzle 12, as shown in the second and third scenarios. In this fourth scenario, $F_{ng}$, $F_{nd}$, and $F_{tn}$ will all be at the greatest level among the four scenarios of Figures 2A-D

As introduced above, the apparatus may comprise components in addition to those responsible for printing the first composition. For example, the apparatus may comprise, or be operatively connected to or in electronic communication with, a sensor (e.g. camera, laser displacement sensor, detector, etc.) and/or a control system.

The apparatus may comprise the sensor. In such cases, the sensor is used to measure a deformation force

imparted to the deformable substrate. Accordingly, the sensor is not limited, and may be any device suitable for measuring the deformation force directly (e.g. via measurement of the deformable substrate itself) and/or indirectly (e.g. via measuring another component to which the deformation force is transferred from the deformable substrate). Moreover, the sensor may be capable of measuring normal deformation forces, tangential deformation forces, or both. The sensor may be integral with the apparatus or incorporated as a stand-alone device. Moreover, the sensor may itself be a system comprising various components (e.g. cameras, detectors, lasers, etc.), or may comprise a plurality of sensors that are the same as or different from one another. Typically, the sensor generates deformation data from measuring the deformation force(s) imparted to the deformable substrate during printing the first composition thereon.

The apparatus may comprise a control system. In such embodiments, the control system is used to control one or more components of the apparatus. Accordingly, the control system is not limited, and may be a stand-alone control unit or a combination of separate components (e.g. computers, controllers, etc.).

The apparatus itself may comprise one or more embedded sensors and an onboard computer, in addition to the various 3D-printing components (e.g. hardware). In these cases, the sensors, the computer, and the 3D-printing hardware are arranged in a closed-loop feedback configuration capable of adjusting printing parameters (e.g. in real-time) in response to certain inputs. The inputs may include deformation data generated by the sensor, which may be read by the computer and compared to a user-specified value (e.g. a deformation force threshold). Based on this comparison, the computer may control the 3D-printing hardware to adjust one or more printing parameters, such as the volumetric flow rate (Q). The sensors may include optical and/or positional sensors for determining and/or measuring the nozzle height (t), the nozzle speed (v), a layer height, etc., as described above, or combinations thereof. Additionally, or alternatively, the apparatus may comprise a camera in communication with a computer configured to perform an image analysis to measure and/or determine one or more positional and/or spatial evaluations (e.g. to determine a height, width, length, shape, etc. of one or more portions of the 3D-object being printed, such as a layer or filament thereof. In this fashion, (II) controlling the volumetric flow rate may comprise utilizing a closed-loop feedback control system comprising the control system and the sensor described above.

As recited in claim 1, the method includes providing a predetermined deformation force threshold (e.g. via input or automatic calculation) to the apparatus, which includes the closed-loop feedback configuration described above. In these embodiments, the sensor routinely or continuously measures the deformation force being applied by the nozzle to the deformable substrate, and the computer routinely or continuously compares the deformation force thus measured to the predetermined deformation force threshold (i.e., monitors the printing in real-time). Additionally, the computer is programmed to adjust the volumetric flow rate (Q) in response to a deformation force measured by the sensor exceeding the predetermined deformation force threshold (e.g., the threshold is a maximum threshold). Typically, the computer is programmed to repeatedly or continuously adjust the volumetric flow rate (Q) until the deformation force as measured by the sensor subceeds (i.e., falls below) the predetermined deformation force threshold. Of course, the computer may alternatively or additionally compare the measured deformation force to a minimum predetermined deformation force threshold. In such instances, the computer may be programmed to maintain the measured deformation force between the minimum and maximum predetermined deformation force thresholds by adjusting (e.g. increasing or decreasing) the volumetric flow rate (Q) as necessary.

As described above, the volumetric flow rate (Q) is influenced by a variety of factors, which can each be independently controlled to adjust (e.g. increase and/or decrease) the volumetric flow rate (Q), and are dictated by the particular composition(s), substrate, and printing parameters being employed. As such, in some embodiments, the method includes plotting for the volumetric flow rate (Q) as a function of the flow rate of the first composition, the nozzle speed, the nozzle height, a dimension of the nozzle (e.g. tip ID (di), size, shape, etc.), and/or the shape of the deformable substrate for establishing parameters to selectively control the volumetric flow rate (Q) to reduce the deformation force applied by the nozzle to the deformable substrate. In these embodiments, the parameters may include various information, such as an absolute value of adjustment (amount of increase or decrease) to the volumetric flow rate (Q) achieved by a particular change to one of the factors plotted. In this fashion, the parameters may be used to select the degree of adjustment to the volumetric flow rate (Q) to be affected. Alternatively or in addition, the parameters may be used to select the degree of reduction in one or more deformation forces to be affected by a particular adjustment to the volumetric flow rate (Q). In these or other embodiments, degree of adjustment in the reduction in the deformation force affected by the adjustment to the volumetric flow rate (Q) may be calculated using the sensor and the computer and used during the plotting to establish the parameters to selectively control the volumetric flow rate (Q). In certain embodiments, the plotting of the various factors is performed automatically (e.g. at the beginning of the method, prior to printing each composition, routinely throughout the method, continuously during the method, etc.

The first composition is printed on the deformable substrate such that the first layer is formed on the deformable substrate. In general, the first layer may have any shape and dimension. For example, the first layer need not be continuous, as in a conventional layer. Likewise, the first layer need not have a consistent thickness. Rather, depending on a desired shape of the 3D article formed by the method, the first layer may take any form. For example, the first layer may comprise a film, which may be continuous or discontinuous in its dimensions, including thickness. Typically, as described

above, the first layer comprises a filament. Alternatively or in addition, the first layer may comprise fused droplets formed from the first composition. The fused droplets may be independently sized and selected and may have any desired deposition pattern, e.g. the fused droplets may contact one another, may be spaced from one another, may be at least partially overlapping, etc. In certain embodiments, the first layer is free from, alternatively is substantially free from, voids.

The method may optionally comprise repeating (I) and (II) with independently selected composition(s) for any additional layer(s). For example, in certain embodiments, the method further comprises printing a second composition to form a second deformable filament comprising the second composition on the deformable first filament of the first layer to give a second layer comprising the second deformable filament on the first layer. In these embodiments, the second composition may be printed in the same manner, or in a different manner, than the first composition. However, any description above relative to (I) printing the first composition to form the first layer is also applicable to printing the second composition on the first layer to form the second layer thereon, and each aspect of each printing step is independently selected. Typically, the second composition is printed at a second volumetric flow rate, such that the method may also comprise controlling the second volumetric flow rate to reduce the deformation force applied by the nozzle to the deformable first filament of the first layer during printing the second composition thereon. The second volumetric flow rate may be the same as or different from the first volumetric flow rate at which the first composition is printed. However, each of the volumetric flow rates is controlled in the manner described above with respect to printing the first composition. In general, the second layer may only contact a portion of an exposed surface of the first layer, or may completely overlap (i.e., may be commensurate to) the first layer. For example, depending on the desired shape of the 3D article, the second layer may build on the first layer selectively, or completely. The second composition may be the same as or different from the first composition utilized to form the first layer, as described in further detail below. Similarly, additional layers may be formed utilizing additional compositions, as described below, with the printing steps described above.

The total number of layers required will depend, for example, on the size and shape of the 3D article, as well as dimensions of the individual and collective layers. One of ordinary skill can readily determine how many layers are required or desired using conventional techniques, such as 3D scanning, rendering, modeling (e.g. parametric and/or vector based modeling), sculpting, designing, slicing, manufacturing and/or printing software. In certain embodiments, once the 3D article is in a final solidified or cured state, the individual layers may not be identifiable.

The first layer and any additional (e.g. subsequent or latter) layer(s), optionally included as described below, are referred to collectively herein as "the layers." In this sense, "the layers" is used herein in plural form to relate to the layers at any stage of the method, e.g. in an unsolidified and/or uncured state, in a partially solidified and/or partially cured state, in a solidified or a final cure state, etc. Generally, any description below relative to a particular layer is also applicable to any other layer, as the layers are independently formed and selected. In certain embodiments, as described above, the method includes forming the deformable substrate prior to forming the first layer thereon. As such, "the layers" also generally encompasses the deformable substrate with regard to description of any properties and/or characteristics of the layers, the exposure to solidification conditions thereof, etc.

The layers can each be of various dimension, including thickness and width. Thickness and/or width tolerances of the layers may depend on the 3D printing process used, with certain printing processes having high resolutions and others having low resolutions. Thicknesses of the layers can be uniform or may vary, and average thicknesses of the layers can be the same or different. Average thickness is generally associated with thickness of the layer immediately after printing. In various embodiments, the layers independently have an average thickness of from about 1 to about 10,000 μm, such as from about 2 to about 1,000, about 5 to about 750, about 10 to about 500, about 25 to about 250, or about 50 to 100 μm. Thinner and thicker thicknesses are also contemplated. This disclosure is not limited to any particular dimensions of any of the layers. As understood in the art, a layer thickness and/or width may measured and/or determined by any technique, such as via manual measurements (e.g. those utilizing a thickness gauge, caliper, micrometer, ruler, etc.), optical measurements (e.g. those utilizing optical sensors, such as intensity-based sensors, triangulation-based sensors, time-of-flight-based sensors, Doppler sensors etc., scanning inferometry, fiber Bragg gratings, etc. ), and/or computation measurements (e.g. those utilizing 3D printing software), and the like, as well as combinations and/or modifications thereof. Typically, a thickness of a particular layer is measured from opposing portions thereof, such as the distance between a first portion adjacent the substrate on which the particular layer is disposed and a second portion opposite the first portion. In this fashion, layer thickness may be measured only in the Z-axis. However, in instances where adjacent layers are off-set with respect to one another in the X-Y plane (i.e., off-set rather than completely "stacked" in the Z-axis), the layer thickness may likewise be measured in an off-set fashion.

Where the second layer is formed, the first and second filaments are referred to herein as the deformable first filament and the deformable second filament, respectively, which extends to and encompasses each of the first and second non-linear filaments independently comprising a single filament or a plurality of filaments, which may be independently selected and formed. However, it is to be appreciated that such reference may also apply to any additional layers comprising additional filaments.

Typically, the layers are substantially free from voids. However, in certain embodiments each of the layers may have a randomized and/or a selectively solidified pattern, regardless of the form of the layers.

If desired, inserts, which may have varying shape, dimension, and may comprise any suitable material, may be disposed or placed on or at least partially in any layer during the method. For example, an insert may be utilized in between subsequent printing steps, and the insert may become integral with the 3D article upon its formation. Alternatively, the insert may be removed at any step during the method, e.g. to leave a cavity or for other functional or aesthetic purposes. The use of such inserts may provide better aesthetics and economics over relying on printing alone.

Finally, the method comprises (III) exposing the layer(s) to a solidification condition. The solidification condition may be any condition which contributes to solidification of the first layer, any additional or subsequent layer(s), and/or the deformable substrate. For example, solidification may be a result of curing or increasing a crosslink density of the layer(s). Alternatively, solidification may be the result of a physical change within a layer, e.g. drying or removing any vehicle which may be present in any of the composition and/or corresponding layer(s), as described below with respect to suitable compositions. Because each layer is independently selected, the solidification condition may vary for each layer.

Depending on a selection of the particular composition, as described below, the solidification condition may be selected from: (i) exposure to moisture; (ii) exposure to heat; (iii) exposure to irradiation; (iv) reduced ambient temperature; (v) exposure to solvent; (vi) exposure to mechanical vibration; (vii) exposure to oxygen; or (viii) a combination of (i) to (vi). The solidification condition typically at least partially solidifies, alternatively solidifies, the layers.

The layers may be exposed to the solidification condition at any time in the method, and exposure to the solidification condition need not be delayed until two or more layers are formed in the method. For example, each layer may be exposed to the solidification condition individually, or all of the layers may be exposed to the solidification condition collectively. Specifically, the first layer may be exposed to the solidification condition to at least partially solidify the first layer prior to forming the second layer thereon. Similarly, the second layer may be at least partially solidified prior to repeating any printing steps for additional layers. The layers may also be subjected or exposed to a solidification condition when in contact with one another, even if these layers were at least partially solidified iteratively prior to each printing step.

At least partial solidification of the layer is generally indicative of cure; however, cure may be indicated in other ways, and solidification may be unrelated to curing. For example, curing may be indicated by a viscosity increase, e.g. bodying of the layer, an increased temperature of the layer, a transparency/opacity change of the layer, an increased surface or bulk hardness, etc. Generally, physical and/or chemical properties of the layer are modified as each layer at least partially solidifies to provide the at least partially solidified layers, respectively. For example, the deformability of a layer typically decreases with the increasing solidity of the layer.

In certain embodiments, "at least partially solidified" means that the particular at least partially solidified layer substantially retains its shape upon exposure to ambient conditions. Ambient conditions refer to at least temperature, pressure, relative humidity, and any other condition that may impact a shape or dimension of the at least partially solidified layer. For example, ambient temperature is room temperature. Ambient conditions are distinguished from solidification conditions, where heat (or elevated temperature) is applied. By "substantially retains its shape," it is meant that a majority of the at least partially solidified layer retains its shape, e.g. the at least partially solidified layer does not flow or deform upon exposure to ambient conditions. Substantially may mean that at least about 50%, 60%, 70%, 80%, 90%, 95%, 96%, 97%, 98%, 99%, 99.5%, 99.9%, 99.99%, or at least about 99.999% or more of the volume of the at least partially solidified layer is maintained in the same shape and dimension over a period of time, e.g. after 1 minute, 5 minutes, 10 minutes, 30 minutes, 1 hour, 4 hours, 8 hours, 12 hours, 1 day, 1 week, 1 month, etc. Said differently, substantially retaining shape means that gravity does not substantially impact shape of the at least partially solidified layer upon exposure to ambient conditions. The shape of the at least partially solidified layer may also impact whether the at least partially solidified layer substantially retains its shape. For example, when the at least partially solidified layer is rectangular or has another simplistic shape, the at least partially solidified layer may be more resistant to deformation at even lesser levels of solidification than at least partially solidified layers having more complex shapes.

More specifically, prior to exposing one or more layers to the solidification condition, the first composition (as well as the second composition and any subsequent compositions) is generally flowable and may be in the form of a liquid, slurry, or gel, alternatively a liquid or slurry, alternatively a liquid. Viscosity of each composition can be independently adjusted depending on the type of 3D printer and its dispensing technique or other considerations. Adjusting viscosity can be achieved, for example, by heating or cooling any of the compositions, adjusting molecular weight of one or more components thereof, by adding or removing a solvent, carrier, and/or diluent, by adding a filler or thixotroping agent, etc.

When the first layer is at least partially solidified prior to printing the second composition, printing of the second composition to form the second layer occurs before the at least partially solidified first layer has reached a final solidified state, i.e., while the at least partially solidified first layer is still deformable. In this sense, the at least partially solidified first layer is also "green." As used herein, the term "green" is used in accordance with its conventional understanding in the art to encompass a partial solidified and/or a partial cure but not a final solidified and/or cure state. The distinction between partial solidification and/or cure state and a final solidification and/or cure state is whether the partially solidified and/or cured layer can undergo further solidification, curing and/or crosslinking. Functional groups of the components of the first composition may be present even in the final solidified and/or cure state, but may remain unreacted due to steric hindrance or other factors.

In these embodiments, printing of the layers may be considered "wet-on-wet" such that the adjacent layers at least physically bond, and may also chemically bond, to one another. For example, in certain embodiments, depending on a selection of the compositions, components in each of the layers may chemically cross-link/cure across the print line. In certain embodiments, the first composition has a skin-over time greater than a print time of the first layer, such that the first layer remains green after formation. In these embodiments, the second deformable filament is formed on the first layer within the skin-over time of the first composition, such that the first and second layers chemically cross-link/cure with one another. There may be certain advantages in having the cross-link network extend across the print line in relation to longevity, durability and appearance of the 3D article. The layers may also be formed around one or more substructures that can provide support or another function of the 3D article. In other embodiments, the compositions are not curable such that the layers are merely physically bonded to one another in the 3D article.

When the layers are applied wet-on-wet, and/or when the layers are only partially solidified and/or partially cured, any iterative steps of exposing the layers to the curing and/or solidification condition may effect cure of more than just the previously printed layer. As noted above, because the cure may extend beyond or across the print line, and because a composite including the layers is typically subjected to the solidification condition, any other partially cured and/or solidified layers may also further, alternatively fully, cure and/or solidify upon a subsequent step of exposing the layers to a curing and/or solidification condition. By way of example, the method may comprise printing the second composition to form the second layer on the at least partially solidified first layer. Prior to printing another composition to form another layer on the second layer, the second layer may be exposed to a solidification condition such that printing another composition to form another layer on the second layer comprises printing another composition to form another layer on an at least partially solidified second layer. However, in such an embodiment, exposing the second layer to the solidification condition may, depending on the selection of the first and second compositions, also further cure and/or solidify the at least partially solidified first layer. The same is true for any additional or subsequent layers

Further, if desired, a composite including all or some of the layers may be subjected to a final solidification step, which may be a final cure step. For example, to ensure that the 3D article is at a desired solidification state, a composite formed by printing and at least partially solidifying the layers may be subjected to a further step of solidification or further steps of solidification where layers may solidify under different types of solidification conditions. The final solidification step, if desired, may be the same as or different from any prior solidification steps, e.g. iterative solidification steps associated with each or any layer.

The substrate composition, the first composition, the second composition, and any subsequent or additional compositions utilized to print subsequent or additional layers, are independently selected and may be the same as or different from one another. For purposes of clarity, reference below to "the composition" or "the compositions" is applicable each of the substrate composition, the first composition, the second composition, and/or any subsequent or additional compositions utilized to print subsequent or additional layers, and are thus not to be construed as requiring any of the particular compositions to be the same as any other composition.

In certain embodiments, at least one of the compositions, e.g. the substrate composition, the first composition, the second composition, and/or any subsequent or additional compositions, comprises: (a) a resin; (b) a silicone composition; (c) a metal; (d) a slurry; or (e) a combination of (a) to (d).

In certain embodiments, at least one of the compositions, e.g. the substrate composition, the first composition, the second composition, and/or any subsequent or additional compositions, comprises the resin. As will be understood in view of the description herein, the resin may comprise, alternatively may be, an organic resin, a silicone resin, or combinations thereof. Specific examples of suitable organic resins are described below with general respect to the resin, and specific examples of suitable silicone resins are described further below with respect to various components of the silicone composition. In this sense, the silicone resins exemplified for use in the silicone composition may additionally or alternatively used in or as the resin in any of the compositions described herein.

The term "resin" is conventionally used to describe a composition that comprises a polymer (e.g. natural or synthetic) and is capable of being cured and/or hardened (i.e., the resin comprises the composition in an uncured and/or unhardened state). However, the term "resin" is also conventionally used to denote a composition comprising a natural or synthetic polymer in a cured and/or hardened state. As such, the term "resin" may be used in either conventional sense to refer to a cured and/or hardened resin, or to an uncured and/or unhardened resin. Accordingly, as used herein, the general term "resin" may refer to a cured or an uncured resin, and the more specific terms "cured resin" and "uncured resin" are used to differentiate between a particular resin in a cured or uncured state. It is also to be understood that the term "uncured" refers to a composition or component that is not fully cross-linked and/or polymerized, as described below. For example, and "uncured" resin may have undergone little to no crosslinking, or may be cross-linked at an amount of less than 100% of available cure sites, e.g. at an amount of from about 10 to about 98, about 15 to about 95, about 20 to about 90, about 20 to about 85, or about 20 to about 80% of available cure sites. Conversely, the term "cured" may refer to the composition when it us completely cross-linking, or has undergone enough crosslinking to achieve a property or characteristic typically ascribed to a cured composition. However, some of the available cure sites in a cured composition may remain uncross-linked. Likewise, it is to be understood that some of the available cure sites in an uncured composition

may be cross-linked. Thus, the terms "cured" and "uncured" may be understood to be functional and/or descriptive terms. For example, a cured resin is typically characterized by an insolubility in organic solvents, an absence of liquid and/or plastic flow under ambient conditions, and/or a resistance to deformation in response to an applied force. In contrast, an uncured resin is typically characterized by a solubility in organic solvents, an ability to undergo liquid and/or plastic flow, and/or an ability to be deformed in response to an applied force (e.g. effected by the printing process). In some embodiments, the composition comprises an uncured resin. In such embodiments, the uncured resin may be present in the composition in an uncured state, but may be capable of being cured (e.g. via reaction of the uncured resin with another component of the composition, via exposure to a curing condition, etc.). The uncured resin, once cured, may no longer be deformable.

Generally, examples of suitable resins comprise reaction products of monomeric units (e.g. monomers, oligomers, polymers, etc.) and curing agents. Curing agents suitable for use in forming such resins typically include at least difunctional molecules that are reactive with functional groups present in the resin-forming monomeric unit. For example, curing agents suitable for use in forming epoxy resins are typically at least difunctional molecules that are reactive with epoxide groups (i.e., comprise two or more epoxide-reactive functional groups). As understood in the art, the terms "curing agent" and "cross-linking agent" can be used interchangeably. Additionally, the curing agent may itself be a monomeric unit, such that resin comprises a reaction product of at least two monomeric unites, which may be the same as or different from one another.

Suitable resins are conventionally named/identified according to a particular functional group present in the reaction product. For example, the term "polyurethane resin" represents a polymeric compound comprising a reaction product of an isocyanate (i.e., a monomeric unit comprising isocyanate functionality) and a polyol (i.e., a chain extender/ curing agent comprising alcohol functionalities). The reaction of the isocyanate and the polyol create urethane functional groups, which were not present in either of the unreacted monomer or curing agent. In certain instances, however, resins are named according to a particular functional group present in the monomeric unit (i.e., the functionality at a cure site). For example, the term "epoxy resin" represents a polymeric compound comprising a cross-linked reaction product of a monomeric unit having one or more epoxide groups (i.e., epoxide functionalities) and a curing agent. However, once cured, the epoxy resin is no longer an epoxy, or no longer includes epoxide groups, but for any unreacted or residual epoxide groups (i.e., cure sites), which may remain after curing, as understood in the art. In other instances, however, suitable resins may comprise the reaction product of one or more monomeric units (i.e., where the curing agent itself is also a monomeric unit), each having the same functionality both prior to and after the reaction. In such instances, the resins may be named according to a functional group present in both the monomeric unit and the reaction product (e.g. an unreacted functional group, or a functional group that is modified during reaction but does not change in kind/name). For example, the term "silicone resin" represents a siloxane-functional polymeric compound comprising a reaction product of a monomeric unit comprising a siloxane functional group. Certain examples of suitable resins comprise long chain thermoplastics such as thermoplastic elastomers (TPE), and reaction products of monomeric units (e.g. monomers, oligomers, polymers, etc.) and curing agents.

In some embodiments, the resin comprises a thermosetting and/or thermoplastic resin. The terms "thermosetting" and "thermoplastic" are used herein the conventional sense, any may thus be understood as descriptive and/or functional characterizations of particular resins. By way of example, the term "thermoplastic" typically describes a resin (e.g. a plastic) that becomes pliable and/or moldable above a specific temperature (e.g. transition temperature, such as a Tg), and also solidifies upon cooling below a specific temperature. Moreover, a "thermoplastic" can typically be remolded into a new shape, e.g. after heating a molded thermoplastic article above the specific temperature to regain pliability prior to and/or during remolding. In contrast, the term "thermoset" typically describes a resin (e.g. a plastic) that is irreversibly cured from a soft solid or viscous liquid (e.g. an uncured resin). As such, once cured/ hardened, a "thermoset" typically cannot be remolded into a new shape via reheating (e.g. to do comprising a Tg greater than a temperature at which the thermoset loses one or more material properties and/or decomposes).

Specific examples of suitable resins typically include polyamides (PA), such as Nylons; polyesters such as polyethylene terephthalates (PET), polybutylene terephthalates (PET), polytrimethylene terephthalates (PTT), polyethylene naphthalates (PEN), liquid crystalline polyesters, and the like; polyolefins such as polyethylenes (PE), polypropylenes (PP), polybutylenes, and the like; styrenic resins; polyoxymethylenes (POM); polycarbonates (PC); polymethylenemethacrylates (PMMA); polyvinyl chlorides (PVC); polyphenylene sulfides (PPS); polyphenylene ethers (PPE); polyimides (PI); polyamideimides (PAI); polyetherimides (PEI); polysulfones (PSU); polyethersulfones; polyketones (PK); polyetherketones (PEK); polyetheretherketones (PEEK); polyetherketoneketones (PEKK); polyarylates (PAR); polyethernitriles (PEN); resol-type; urea (e.g. melamine-type); phenoxy resins; fluorinated resins, such as polytetrafluoroethylenes; thermoplastic elastomers, such as polystyrene types, polyolefin types, polyurethane types, polyester types, polyamide types, polybutadiene types, polyisoprene types, fluoro types, and the like; and copolymers, modifications, and combinations thereof. Additionally, elastomers and/or rubbers can be added to or compounded with the resin, e.g. to improve certain properties in the uncured resin, such as deformability, cure time, etc., and/or in the cured resin (and thus the 3D article), such as flexibility, impact strength, etc. In some embodiments, the resin may be disposed in a vehicle or

solvent.

In certain embodiments, at least one of the compositions, e.g. the substrate composition, the first composition, the second composition, and/or any subsequent or additional compositions, comprises the silicone composition, which may be a rubber or elastomer silicone composition. In such embodiments, the 3D article may be utilized in biological and/or health care applications in view of the excellent compatibility between silicones and biological systems. Suitable silicone compositions may be independently selected from (a) hydrosilylation-curable silicone compositions; (b) condensation-curable silicone compositions; (c) thiol-ene reaction-curable silicone compositions; (d) free-radical-curable silicone compositions; and (e) ring-opening reaction curable silicone compositions. In these embodiments, the silicone compositions are generally curable such that exposure to the solidification condition may be referred to as exposure to a curing condition. As understood in the art, these silicone compositions may be cured via different curing conditions, such as exposure to moisture, exposure to heat, exposure to irradiation, etc. Moreover, these silicone compositions may be curable upon exposure to different types of curing conditions, e.g. both heat and irradiation, which may be utilized together or as only one. In addition, exposure to a curing condition may cure or initiate cure of different types of silicone compositions. For example, heat may be utilized to cure or initiate cure of condensation-curable silicone compositions, hydrosilylation-curable silicone compositions, and free radical-curable silicone compositions.

The silicone compositions may have the same cure mechanism upon application of the curing condition, but may still be independently selected from one another. For example, the first composition may comprise a condensation-curable silicone composition, and the second composition may also comprise a condensation-curable silicone composition, wherein the condensation-curable silicone compositions differ from one another, e.g. by components, relative amounts thereof, etc.

In certain embodiments, each of the silicone compositions utilized in the method cures via the same cure mechanism upon application of the curing condition. These embodiments easily allow for cure across the print line, if desired, as the components of in each of the silicone compositions may readily react with one another in view of having the same cure mechanism upon application of the curing condition. In these embodiments, each of the silicone compositions may still differ from one another in terms of the actual components utilized and relative amounts thereof, even though the cure mechanism is the same in each of the silicone compositions. In contrast, although there may be some cure across the print line when each of the layers cures via a different mechanism (e.g. hydrosilylation versus condensation), components in these layers may not be able to react with one another upon application of the curing condition, which may be desirable in other applications.

In certain embodiments, at least one of the silicone compositions comprises a hydrosilylation-curable silicone composition. In these embodiments, the hydrosilylation-curable silicone composition typically comprises: (A) an organopolysiloxane having an average of at least two silicon-bonded alkenyl groups or silicon-bonded hydrogen atoms per molecule; (B) an organosilicon compound having an average of at least two silicon-bonded hydrogen atoms or silicon-bonded alkenyl groups per molecule capable of reacting with the silicon-bonded alkenyl groups or silicon-bonded hydrogen atoms in the organopolysiloxane (A); and (C) a hydrosilylation catalyst. When the organopolysiloxane (A) includes silicon-bonded alkenyl groups, the organosilicon compound (B) includes at least two silicon-bonded hydrogen atoms per molecule, and when the organopolysiloxane (A) includes silicon-bonded hydrogen atoms, the organosilicon compound (B) includes at least two silicon-bonded alkenyl groups per molecule. The organosilicon compound (B) may be referred to as a cross-linker or cross-linking agent. In certain embodiments, the organopolysiloxane (A) and/or the organosilicon compound (B) may independently include more than two hydrosilylation-reactive functional groups (e.g. silicon-bonded alkenyl groups and/or silicon-bonded hydrogen atoms per molecule, such as an average of 3, 4, 5, 6, or more hydrosilylation-reactive functional groups per molecule. In such embodiments, the hydrosilylation-curable silicone composition may be formulated to be chain-extendable and cross-linkable via hydrosilylation, such as by differing the number and/or type of hydrosilylation-reactive functional groups per molecule of the organopolysiloxane (A) from the number and/or type of hydrosilylation-reactive functional groups per molecule of the organosilicon compound (B). For example, in these embodiments, when the organopolysiloxane (A) includes at least two silicon-bonded alkenyl groups per molecule, the organosilicon compound (B) may include at least three silicon-bonded hydrogen atoms per molecule, and when the organopolysiloxane (A) includes at least two silicon-bonded hydrogen atoms, the organosilicon compound (B) may include at least three silicon-bonded alkenyl groups per molecule. Accordingly, the ratio of hydrosilylation-reactive functional groups per molecule of the organopolysiloxane (A) to hydrosilylation-reactive functional groups per molecule of the organosilicon compound (B) may be equal to, less than, or greater than 1:1, such as from 1:5 to 5:1, alternatively from 1:4 to 4:1, alternatively from 1:3 to 3:1, alternatively from 1:2 to 2:1, alternatively from 2:3 to 3:2, alternatively from 3:4 to 4:3.

The organopolysiloxane (A) and the organosilicon compound (B) may independently be linear, branched, cyclic, or resinous. In particular, the organopolysiloxane (A) and the organosilicon compound (B) may comprise any combination of M, D, T, and Q units. The symbols M, D, T, and Q represent the functionality of structural units of organopolysiloxanes. M represents the monofunctional unit $R^0{}_3SiO_{1/2}$. D represents the difunctional unit $R^0{}_2SiO_{2/2}$. T represents the trifunctional unit $R^0SiO_{3/2}$. Q represents the tetrafunctional unit $SiO_{4/2}$. Generic structural formulas of these units are shown below:

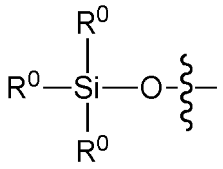

[M]

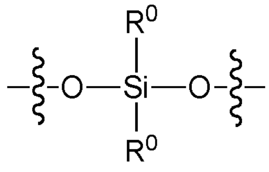

[D]

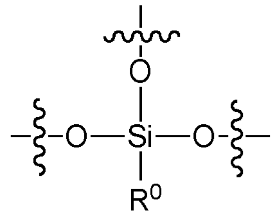

[T]

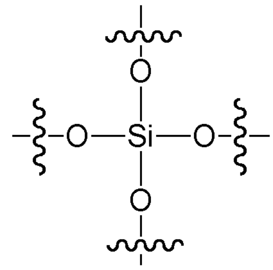

[Q]

In these structures/formulae, each $R^0$ may be any hydrocarbon, aromatic, aliphatic, alkyl, alkenyl, or alkynyl group.

The particular organopolysiloxane (A) and organosilicon compound (B) may be selected based on desired properties of the 3D article and layers during the method. For example, it may be desirable for the layers to be in the form of an elastomer, a gel, a resin, etc., and selecting the components of the silicone composition allows one of skill in the art to achieve a range of desirable properties.

For example, in certain embodiments, one of the organopolysiloxane (A) and the organosilicon compound (B) comprises a silicone resin, which typically comprises T and/or Q units in combination with M and/or D units. When the organopolysiloxane (A) and/or organosilicon compound (B) comprises a silicone resin, the silicone resin may be a DT resin, an MT resin, an MDT resin, a DTQ resin, an MTQ resin, an MDTQ resin, a DQ resin, an MQ resin, a DTQ resin, an MTQ resin, or an MDQ resin. Generally, when the hydrosilylation-curable silicone composition comprises a resin, the layer(s) and resulting 3D article have increased rigidity.

Alternatively, in other embodiments, the organopolysiloxane (A) and/or the organosilicon compound (B) is an organopolysiloxane comprising repeating D units. Such organopolysiloxanes are substantially linear but may include some branching attributable to T and/or Q units. Alternatively, such organopolysiloxanes are linear. In these embodiments, the layer(s) and resulting 3D article are elastomeric.

The silicon-bonded alkenyl groups and silicon-bonded hydrogen atoms of the organopolysiloxane (A) and the organosilicon compound (B), respectively, may independently be pendent, terminal, or in both positions.

In a specific embodiment, the organopolysiloxane (A) has the general formula:

$$(R^1R^2{}_2SiO_{1/2})_w(R^2{}_2SiO_{2/2})_x(R^2SiO_{3/2})_y(SiO_{4/2})_z \qquad (I)$$

wherein each $R^1$ is an independently selected hydrocarbyl group, which may be substituted or unsubstituted, and each $R^2$ is independently selected from $R^1$ and an alkenyl group, with the proviso that at least two of $R^2$ are alkenyl groups, and w, x, y, and z are mole fractions such that w+x+y+z=1. As understood in the art, for linear organopolysiloxanes, subscripts y and z are generally 0, whereas for resins, subscripts y and/or z >0. Various alternative embodiments are described below with reference to w, x, y and z. In these embodiments, the subscript w may have a value of from 0 to 0.9999, alternatively from 0 to 0.999, alternatively from 0 to 0.99, alternatively from 0 to 0.9, alternatively from 0.9 to 0.999, alternatively from 0.9 to 0.999, alternatively from 0.8 to 0.99, alternatively from 0.6 to 0.99. The subscript x typically has a value of from 0 to 0.9, alternatively from 0 to 0.45, alternatively from 0 to 0.25. The subscript y typically has a value of from 0 to 0.99, alternatively from 0.25 to 0.8, alternatively from 0.5 to 0.8. The subscript z typically has a value of from 0 to 0.99, alternatively from 0 to 0.85, alternatively from 0.85 to 0.95, alternatively from 0.6 to 0.85, alternatively from 0.4 to 0.65, alternatively from 0.2 to 0.5, alternatively from 0.1 to 0.45, alternatively from 0 to 0.25, alternatively from 0 to 0.15.

In certain embodiments, each $R^1$ is a $C_1$ to $C_{10}$ hydrocarbyl group, which may be substituted or unsubstituted, and which may include heteroatoms within the hydrocarbyl group, such as oxygen, nitrogen, sulfur, etc. Acyclic hydrocarbyl and halogen-substituted hydrocarbyl groups containing at least 3 carbon atoms can have a branched or unbranched structure. Examples of hydrocarbyl groups represented by $R^1$ include, but are not limited to, alkyl groups, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, octyl, nonyl, and decyl; cycloalkyl groups, such as cyclopentyl, cyclohexyl, and methylcyclohexyl; aryl groups, such as phenyl and naphthyl; alkaryl groups, such as tolyl and xylyl; and aralkyl groups, such as benzyl and phenethyl. Examples of halogen-substituted hydrocarbyl groups represented by $R^1$ include, but are not limited to, 3,3,3-trifluoropropyl, 3-chloropropyl, chlorophenyl, dichlorophenyl, 2,2,2-trifluoroethyl, 2,2,3,3-tetrafluoropropyl, and 2,2,3,3,4,4,5,5-octafluoropentyl.

The alkenyl groups represented by $R^2$, which may be the same or different within the organopolysiloxane (A), typically have from 2 to 10 carbon atoms, alternatively from 2 to 6 carbon atoms, and are exemplified by, for example, vinyl, allyl, butenyl, hexenyl, and octenyl.

In these embodiments, the organosilicon compound (B) may be further defined as an organohydrogensilane, an organopolysiloxane an organohydrogensiloxane, or a combination thereof. The structure of the organosilicon compound (B) can be linear, branched, cyclic, or resinous. In acyclic polysilanes and polysiloxanes, the silicon-bonded hydrogen atoms can be located at terminal, pendant, or at both terminal and pendant positions. Cyclosilanes and cyclosiloxanes typically have from 3 to 12 silicon atoms, alternatively from 3 to 10 silicon atoms, alternatively from 3 to 4 silicon atoms. The organohydrogensilane can be a monosilane, disilane, trisilane, or polysilane.

Hydrosilylation catalyst (C) includes at least one hydrosilylation catalyst that promotes the reaction between the organopolysiloxane (A) and the organosilicon compound (B). The hydrosilylation catalyst (C) can be any of the well-known hydrosilylation catalysts comprising a platinum group metal (i.e., platinum, rhodium, ruthenium, palladium, osmium and iridium) or a compound containing a platinum group metal. Typically, the platinum group metal is platinum, based on its high activity in hydrosilylation reactions.

Specific hydrosilylation catalysts suitable for (C) include the complexes of chloroplatinic acid and certain vinyl-containing organosiloxanes disclosed by Willing in U.S. Pat. No. 3,419,593. A catalyst of this type is the reaction product of chloroplatinic acid and 1,3-diethenyl-1,1,3,3-tetramethyldisiloxane.

The hydrosilylation catalyst (C) can also be a supported hydrosilylation catalyst comprising a solid support having a platinum group metal on the surface thereof. A supported catalyst can be conveniently separated from organopolysiloxanes, for example, by filtering the reaction mixture. Examples of supported catalysts include, but are not limited to, platinum on carbon, palladium on carbon, ruthenium on carbon, rhodium on carbon, platinum on silica, palladium on silica, platinum on alumina, palladium on alumina, and ruthenium on alumina.

In addition or alternatively, the hydrosilylation catalyst (C) can also be a microencapsulated platinum group metal-containing catalyst comprising a platinum group metal encapsulated in a thermoplastic resin. Hydrosilylation-curable silicone compositions including microencapsulated hydrosilylation catalysts are stable for extended periods of time, typically several months or longer, under ambient conditions, yet cure relatively rapidly at temperatures above the melting or softening point of the thermoplastic resin(s). Microencapsulated hydrosilylation catalysts and methods of preparing them are well known in the art, as exemplified in U.S. Pat. No. 4,766,176 and the references cited therein, and U.S. Pat. No. 5,017,654. The hydrosilylation catalyst (C) can be a single catalyst or a mixture comprising two or more different catalysts that differ in at least one property, such as structure, form, platinum group metal, complexing ligand, and thermoplastic resin.

The hydrosilylation catalyst (C) may also, or alternatively, be a photoactivatable hydrosilylation catalyst, which may initiate curing via irradiation and/or heat. The photoactivatable hydrosilylation catalyst can be any hydrosilylation catalyst capable of catalyzing the hydrosilylation reaction, particularly upon exposure to radiation having a wavelength of from 150 to 800 nanometers (nm).

Specific examples of photoactivatable hydrosilylation catalysts include, but are not limited to, platinum(II) β-diketonate complexes such as platinum(II) bis(2,4-pentanedioate), platinum(II) bis(2,4-hexanedioate), platinum(II) bis(2,4-heptanedioate), platinum(II) bis(1-phenyl-1,3-butanedioate, platinum(II) bis(1,3-diphenyl-1,3-propanedioate), platinum(II) bis(1,1,1,5,5,5-hexafluoro-2,4-pentanedioate); (η-cyclopentadienyl)trialkylplatinum complexes, such as (Cp)trimethylplatinum, (Cp)ethyldimethylplatinum, (Cp)triethylplatinum, (chloro-Cp)trimethylplatinum, and (trimethylsilyl-Cp)trimethylplatinum, where Cp represents cyclopentadienyl; triazene oxide-transition metal complexes, such as Pt$[C_6H_5NNNOCH_3]_4$, Pt[p-CN-$C_6$H4NNNO$C_6H_{11}]_4$, Pt[p-$H_3COC_6H_4NNNOC_6H_{11}]_4$, Pt[p-$CH_3(CH_2)_x$-$C_6H_4NNNOCH_3]_4$, 1,5-cyclooctadiene.Pt[p-CN-$C_6H_4NNNOC_6H_{11}]_2$, 1,5-cyclooctadiene.Pt[p-$CH_3O$-$C_6H_4NNNOCH_3]_2$, $I(C_6H_5)_3P]_3$Rh[p-CN-$C_6H_4NNNOC_6H_{11}$], and Pd[p-$CH_3(CH_2)$x-$C_6H_4NNNOCH_3]_2$, where x is 1, 3, 5, 11, or 17; (η-diolefin)(σ-aryl)platinum complexes, such as ($\eta^4$-1,5-cyclooctadienyl)diphenylplatinum, $\eta^4$-1,3,5,7-cyclooctatetraenyl)diphenylplatinum, ($\eta^4$-2,5-norboradienyl)diphenylplatinum, ($\eta^4$-1,5-cyclooctadienyl)bis-(4-dimethylaminophenyl)platinum, ($\eta^4$-1,5-cyclooctadienyl)bis-(4-acetylphenyl)platinum, and ($\eta^4$-1,5-cyclooctadienyl)bis-(4-trifluormethylphenyl)platinum. Typically, the photoactivatable hydrosilylation catalyst is a Pt(II) β-diketonate complex and more typically the catalyst is platinum(II) bis(2,4-pentanedioate). The hydrosilylation catalyst (C) can be a single photoactivatable hydrosilylation catalyst or a mixture comprising two or more different photoactivatable hydrosilylation catalysts.

The concentration of the hydrosilylation catalyst (C) is sufficient to catalyze the addition reaction between the organopolysiloxane (A) and the organosilicon compound (B). In certain embodiments, the concentration of the hydrosilylation catalyst (C) is sufficient to provide typically from 0.1 to 1000 ppm of platinum group metal, alternatively from 0.5 to 100 ppm of platinum group metal, alternatively from 1 to 25 ppm of platinum group metal, based on the combined weight of the organopolysiloxane (A) and the organosilicon compound (B).

The hydrosilylation-curable silicone composition may be a two-part composition where the organopolysiloxane (A) and organosilicon compound (B) are in separate parts. In these embodiments, the hydrosilylation catalyst (C) may be present along with either or both of the organopolysiloxane (A) and organosilicon compound (B). Alternatively still, the hydrosilylation catalyst (C) may be separate from the organopolysiloxane (A) and organosilicon compound (B) in a third part such that the hydrosilylation reaction-curable silicone composition is a three-part composition.

In one specific embodiment the hydrosilylation-curable silicone composition comprises $ViMe_2(Me_2SiO)_{128}$Si-

$Me_2Vi$ as the organopolysiloxane (A), $Me_3SiO(Me_2SiO)_{14}(MeHSiO)_{16}SiMe_3$ as the organosilicon compound (B) and a complex of platinum with divinyltetramethyldisiloxane as (C) such that platinum is present in a concentration of 5 ppm based on (A), (B) and (C).

Solidification conditions for such hydrosilylation-curable silicone compositions may vary. For example, hydrosilylation-curable silicone composition may be solidified or cured upon exposure to irradiation and/or heat. One of skill in the art understands how selection of the hydrosilylation catalyst (C) impacts techniques for solidification and curing. In particular, photoactivatable hydrosilylation catalysts are typically utilized when curing via irradiation is desired.

In these or other embodiments, at least one of the silicone compositions comprises a condensation-curable silicone composition. In these embodiments, the condensation-curable silicone composition typically comprises (A') an organopolysiloxane having an average of at least two silicon-bonded hydroxyl or hydrolysable groups per molecule; optionally (B') an organosilicon compound having an average of at least two silicon-bonded hydrogen atoms, hydroxyl groups, or hydrolysable groups per molecule; and (C') a condensation catalyst. Although any parameter or condition may be selectively controlled during the method or any individual step thereof, relative humidity and/or moisture content of ambient conditions may be selectively controlled to further impact a cure rate of condensation-curable silicone compositions.

The organopolysiloxane (A') and the organosilicon compound (B') may independently be linear, branched, cyclic, or resinous. In particular, the organopolysiloxane (A') and the organosilicon compound (B') may comprise any combination of M, D, T, and Q units, as with the organopolysiloxane (A') and the organosilicon compound (B') disclosed above.

The particular organopolysiloxane (A') and organosilicon compound (B') may be selected based on desired properties of the 3D article and layers during the method. For example, it may be desirable for the layers to be in the form of an elastomer, a gel, a resin, etc., and selecting the components of the silicone composition allows one of skill in the art to achieve a range of desirable properties.

For example, in certain embodiments, one of the organopolysiloxane (A') and the organosilicon compound (B') comprises a silicone resin, which typically comprises T and/or Q units in combination with M and/or D units. When the organopolysiloxane (A') and/or organosilicon compound (B') comprises a silicone resin, the silicone resin may be a DT resin, an MT resin, an MDT resin, a DTQ resin, an MTQ resin, an MDTQ resin, a DQ resin, an MQ resin, a DTQ resin, an MTQ resin, or an MDQ resin. Generally, when the condensation-curable silicone composition comprises a resin, the layer(s) and resulting 3D article have increased rigidity.

Alternatively, in other embodiments, the organopolysiloxane (A') and/or the organosilicon compound (B') is an organopolysiloxane comprising repeating D units. Such organopolysiloxanes are substantially linear but may include some branching attributable to T and/or Q units. Alternatively, such organopolysiloxanes are linear. In these embodiments, the layer(s) and resulting 3D article are elastomeric.

The silicon-bonded hydroxyl groups and silicon-bonded hydrogen atoms, hydroxyl groups, or hydrolysable groups of the organopolysiloxane (A') and the organosilicon compound (B'), respectively, may independently be pendent, terminal, or in both positions.

As known in the art, silicon-bonded hydroxyl groups result from hydrolyzing silicon-bonded hydrolysable groups. These silicon-bonded hydroxyl groups may condense to form siloxane bonds with water as a byproduct.

Examples of hydrolysable groups include the following silicon-bonded groups: H, a halide group, an alkoxy group, an alkylamino group, a carboxy group, an alkyliminoxy group, an alkenyloxy group, or an N-alkylamido group. Alkylamino groups may be cyclic amino groups.

In a specific embodiment, the organopolysiloxane (A') has the general formula:

$$(R^1R^3_2SiO_{1/2})_{w'}(R^3_2SiO_{2/2})_{x'}(R^3SiO_{3/2})_{y'}(SiO_{4/2})_{z'} \qquad (II)$$

wherein each $R^1$ is defined above and each $R^3$ is independently selected from $R^1$ and a hydroxyl group, a hydrolysable group, or combinations thereof with the proviso that at least two of $R^3$ are hydroxyl groups, hydrolysable groups, or combinations thereof, and w', x', y', and z' are mole fractions such that w'+x'+y'+z'=1. As understood in the art, for linear organopolysiloxanes, subscripts y' and z' are generally 0, whereas for resins, subscripts y' and/or z' >0. Various alternative embodiments are described below with reference to w', x', y' and z'. In these embodiments, the subscript w' may have a value of from 0 to 0.9999, alternatively from 0 to 0.999, alternatively from 0 to 0.99, alternatively from 0 to 0.9, alternatively from 0.9 to 0.999, alternatively from 0.9 to 0.999, alternatively from 0.8 to 0.99, alternatively from 0.6 to 0.99. The subscript x' typically has a value of from 0 to 0.9, alternatively from 0 to 0.45, alternatively from 0 to 0.25. The subscript y' typically has a value of from 0 to 0.99, alternatively from 0.25 to 0.8, alternatively from 0.5 to 0.8. The subscript z' typically has a value of from 0 to 0.99, alternatively from 0 to 0.85, alternatively from 0.85 to 0.95, alternatively from 0.6 to 0.85, alternatively from 0.4 to 0.65, alternatively from 0.2 to 0.5, alternatively from 0.1 to 0.45, alternatively from 0 to 0.25, alternatively from 0 to 0.15.

As set forth above, the condensation-curable silicone composition further comprises the organosilicon compound (B'). The organosilicon compound (B') may be linear, branched, cyclic, or resinous. In one embodiment, the

organosilicon compound (B') has the formula $R^1_qSiX_{4-q}$, wherein $R^1$ is defined above, X is a hydrolysable group, and q is 0 or 1.

Specific examples of organosilicon compounds (B') include alkoxy silanes such as $MeSi(OCH_3)_3$, $CH_3Si(OCH_2CH_3)_3$, $CH_3Si(OCH_2CH_2CH_3)_3$, $CH_3Si[O(CH_2)_3CH_3]_3$, $CH_3CH_2Si(OCH_2CH_3)_3$, $C_6H_5Si(OCH_3)_3$, $C_6H_5CH_2Si(OCH_3)_3$, $C_6H_5Si(OCH_2CH_3)_3$, $CH_2=CHSi(OCH_3)_3$, $CH_2=CHCH_2Si(OCH_3)_3$, $CF_3CH_2CH_2Si(OCH_3)_3$, $CH_3Si(OCH_2CH_2OCH_3)_3$, $CF_3CH_2CH_2Si(OCH_2CH_2OCH_3)_3$, $CH_2=CHSi(OCH_2CH_2OCH_3)_3$, $CH_2=CHCH_2Si(OCH_2CH_2OCH_3)_3$, $C_6H_5Si(OCH_2CH_2OCH_3)_3$, $Si(OCH_3)_4$, $Si(OC_2H_5)_4$, and $Si(OC_3H_7)_4$; organoacetoxysilanes such as $CH_3Si(OCOCH_3)_3$, $CH_3CH_2Si(OCOCH_3)_3$, and $CH_2=CHSi(OCOCH_3)_3$; organoiminooxysilanes such as $CH_3Si[O-N=C(CH_3)CH_2CH_3]_3$, $Si[O-N=C(CH_3)CH_2CH_3]_4$, and $CH_2=CHSi[O-N=C(CH_3)CH_2CH_3]_3$; organoacetamidosilanes such as $CH_3Si[NHC(=O)CH_3]_3$ and $C_6H_5Si[NHC(=O)CH_3]_3$; amino silanes such as $CH_3Si[NH(C_4H_9)]_3$ and $CH_3Si(NHC_6H_{11})_3$; and organoaminooxysilanes.

The organosilicon compound (B') can be a single silane or a mixture of two or more different silanes, each as described above. Also, methods of preparing tri- and tetra-functional silanes are well known in the art; many of these silanes are commercially available.

When present, the concentration of the organosilicon compound (B') in the condensation-curable silicone composition is sufficient to cure (cross-link) the organopolysiloxane (A'). The particular amount of the organosilicon compound (B') utilized depends on the desired extent of cure, which generally increases as the ratio of the number of moles of silicon-bonded hydrolysable groups in the organosilicon compound (B') to the number of moles of silicon-bonded hydroxy groups in the organopolysiloxane (A') increases. The optimum amount of the organosilicon compound (B') can be readily determined by routine experimentation.

The condensation catalyst (C') can be any condensation catalyst typically used to promote condensation of silicon-bonded hydroxy (silanol) groups to form Si-O-Si linkages. Examples of condensation catalysts include, but are not limited to, amines, complexes of metals (e.g. lead, tin, zinc, iron, titanium, zirconium) with organic ligands (e.g. carboxyl, hydrocarbyl, alkoxyl, etc.) In particular embodiments, the condensation catalyst (C') can be selected from tin(II) and tin(IV) compounds such as tin dilaurate, tin dioctoate, dibutyltin dilaurate, dibutyltin diacetate, and tetrabutyl tin; and titanium compounds such as titanium tetrabutoxide. In these or other embodiments, the condensation catalyst (C') may be selected from zinc-based, iron-based, and zirconium-based catalysts.

When present, the concentration of the condensation catalyst (C') is typically from 0.1 to 10% (w/w), alternatively from 0.5 to 5% (w/w), alternatively from 1 to 3% (w/w), based on the total weight of the organopolysiloxane (A') in the condensation-curable silicone composition.

When the condensation-curable silicone composition includes the condensation catalyst (C'), the condensation-curable silicone composition is typically a two-part composition where the organopolysiloxane (A') and condensation catalyst (C') are in separate parts. In this embodiment, the organosilicon compound (B') is typically present along with the condensation catalyst (C'). Alternatively still, the condensation-curable silicone composition may be a three-part composition, where the organopolysiloxane (A'), the organosilicon compound (B') and condensation catalyst (C') are in separate parts.

Solidification conditions for such condensation-curable silicone compositions may vary. For example, condensation-curable silicone composition may be solidified or cured upon exposure to ambient conditions, a moisturized atmosphere, and/or heat, although heat is commonly utilized to accelerate solidification and curing.

In these or other embodiments, at least one of the silicone compositions comprises a free radical-curable silicone composition. In one embodiment, the free radical-curable silicone composition comprises (A") an organopolysiloxane having an average of at least two silicon-bonded unsaturated groups and (C") a free radical initiator.

The organopolysiloxane (A") may be linear, branched, cyclic, or resinous. In particular, the organopolysiloxane (A") may comprise any combination of M, D, T, and Q units, as with the organopolysiloxane (A') and the organosilicon compound (B') disclosed above.

The particular organopolysiloxane (A") may be selected based on desired properties of the 3D article and layers during the method. For example, it may be desirable for the layers to be in the form of an elastomer, a gel, a resin, etc., and selecting the components of the silicone composition allows one of skill in the art to achieve a range of desirable properties.

For example, in certain embodiments, the organopolysiloxane (A") comprises a silicone resin, which typically comprises T and/or Q units in combination with M and/or D units. When the organopolysiloxane (A") comprises a silicone resin, the silicone resin may be a DT resin, an MT resin, an MDT resin, a DTQ resin, an MTQ resin, an MDTQ resin, a DQ resin, an MQ resin, a DTQ resin, an MTQ resin, or an MDQ resin. Generally, when the hydrosilylation-curable silicone composition comprises a resin, the layer(s) and resulting 3D article have increased rigidity.

Alternatively, in other embodiments, the organopolysiloxane (A") comprises repeating D units. Such organopolysiloxanes are substantially linear but may include some branching attributable to T and/or Q units. Alternatively, such organopolysiloxanes are linear. In these embodiments, the layer(s) and resulting 3D article are elastomeric.

The silicon-bonded unsaturated groups of the organopolysiloxane (A") may be pendent, terminal, or in both positions. The silicon-bonded unsaturated groups may include ethylenic unsaturation in the form of double bonds and/or

triple bonds. Exemplary examples of silicon-bonded unsaturated groups include silicon-bonded alkenyl groups and silicon-bonded alkynyl groups. The unsaturated groups may be bonded to silicon directly, or indirectly through a bridging group such as an alkylene group, an ether, an ester, an amide, or another group.

In a specific embodiment, the organopolysiloxane (A") has the general formula:

$$(R^1R^4{}_2SiO_{1/2})_{w"}(R^4{}_2SiO_{2/2})_{x"}(R^4SiO_{3/2})_{y"}(SiO_{4/2})_{z"} \qquad (III)$$

wherein each $R^1$ is defined above and each $R^4$ is independently selected from $R^1$ and an unsaturated group, with the proviso that at least two of $R^4$ are unsaturated groups, and w", x", y", and z" are mole fractions such that w"+x"+y"+z"=1. As understood in the art, for linear organopolysiloxanes, subscripts y" and z" are generally 0, whereas for resins, subscripts y" and/or z" >0. Various alternative embodiments are described below with reference to w", x", y" and z". In these embodiments, the subscript w" may have a value of from 0 to 0.9999, alternatively from 0 to 0.999, alternatively from 0 to 0.99, alternatively from 0 to 0.9, alternatively from 0.9 to 0.999, alternatively from 0.9 to 0.999, alternatively from 0.8 to 0.99, alternatively from 0.6 to 0.99. The subscript x" typically has a value of from 0 to 0.9, alternatively from 0 to 0.45, alternatively from 0 to 0.25. The subscript y" typically has a value of from 0 to 0.99, alternatively from 0.25 to 0.8, alternatively from 0.5 to 0.8. The subscript z" typically has a value of from 0 to 0.99, alternatively from 0 to 0.85, alternatively from 0.85 to 0.95, alternatively from 0.6 to 0.85, alternatively from 0.4 to 0.65, alternatively from 0.2 to 0.5, alternatively from 0.1 to 0.45, alternatively from 0 to 0.25, alternatively from 0 to 0.15.

The unsaturated groups represented by $R^4$ may be the same or different and are independently selected from alkenyl and alkynyl groups.. The alkenyl groups represented by $R^4$, which may be the same or different, are as defined and exemplified in the description of $R^2$ above. The alkynyl groups represented by $R^4$, which may be the same or different, typically have from 2 to about 10 carbon atoms, alternatively from 2 to 8 carbon atoms, and are exemplified by, but are not limited to, ethynyl, propynyl, butynyl, hexynyl, and octynyl.

The free radical-curable silicone composition can further comprise an unsaturated compound selected from (i) at least one organosilicon compound having at least one silicon-bonded alkenyl group per molecule, (ii) at least one organic compound having at least one aliphatic carbon-carbon double bond per molecule, (iii) at least one organosilicon compound having at least one silicon-bonded acryloyl group per molecule; (iv) at least one organic compound having at least one acryloyl group per molecule; and (v) mixtures comprising (i), (ii), (iii) and (iv). The unsaturated compound can have a linear, branched, or cyclic structure.

The organosilicon compound (i) can be an organosilane or an organosiloxane. The organosilane can be a monosilane, disilane, trisilane, or polysilane. Similarly, the organosiloxane can be a disiloxane, trisiloxane, or polysiloxane. Cyclosilanes and cyclosiloxanes typically have from 3 to 12 silicon atoms, alternatively from 3 to 10 silicon atoms, alternatively from 3 to 4 silicon atoms. In acyclic polysilanes and polysiloxanes, the silicon-bonded alkenyl group(s) can be located at terminal, pendant, or at both terminal and pendant positions.

Specific examples of organosilanes include, but are not limited to, silanes having the following formulae:

$Vi_4Si$, $PhSiVi_3$, $MeSiVi_3$, $PhMeSiVi_2$, $Ph_2SiVi_2$, and $PhSi(CH_2CH{=}CH_2)3$,

wherein Me is methyl, Ph is phenyl, and Vi is vinyl.

Specific examples of organosiloxanes include, but are not limited to, siloxanes having the following formulae:

$PhSi(OSiMe_2Vi)_3$, $Si(OSiMe_2Vi)_4$, $MeSi(OSiMe_2Vi)_3$, and $Ph_2Si(OSiMe_2Vi)_2$,

wherein Me is methyl, Vi is vinyl, and Ph is phenyl.

The organic compound can be any organic compound containing at least one aliphatic carbon-carbon double bond per molecule, provided the compound does not prevent the organopolysiloxane (A") from curing to form a silicone resin film. The organic compound can be an alkene, a diene, a triene, or a polyene. Further, in acyclic organic compounds, the carbon-carbon double bond(s) can be located at terminal, pendant, or at both terminal and pendant positions.

The organic compound can contain one or more functional groups other than the aliphatic carbon-carbon double bond. Examples of suitable functional groups include, but are not limited to, -O-, >C=O, -CHO, $-CO_2-$, C≡N, $-NO_2$, >C=C<, -C≡C-, -F, -Cl, -Br, and -I. The suitability of a particular unsaturated organic compound for use in the free-radical curable silicone composition can be readily determined by routine experimentation.

Examples of organic compounds containing aliphatic carbon-carbon double bonds include, but are not limited to, 1,4-divinylbenzene, 1,3-hexadienylbenzene, and 1,2-diethenylcyclobutane.

The unsaturated compound can be a single unsaturated compound or a mixture comprising two or more different unsaturated compounds, each as described above. For example, the unsaturated compound can be a single organosilane, a mixture of two different organosilanes, a single organosiloxane, a mixture of two different organosiloxanes, a mixture of an organosilane and an organosiloxane, a single organic compound, a mixture of two different organic

compounds, a mixture of an organosilane and an organic compound, or a mixture of an organosiloxane and an organic compound.

The free radical initiator (C") is a compound that produces a free radical, and is utilized to initiate polymerization of the organopolysiloxane (A"). Typically, the free radical initiator (C") produces a free radical via dissociation caused by irradiation, heat, and/or reduction by a reducing agent. The free radical initiator (C") may be an organic peroxide. Examples of organic peroxides include, diaroyl peroxides such as dibenzoyl peroxide, di-p-chlorobenzoyl peroxide, and bis-2,4-dichlorobenzoyl peroxide; dialkyl peroxides such as di-t-butyl peroxide and 2,5-dimethyl-2,5-di-(t-butylperoxy)hexane; diaralkyl peroxides such as dicumyl peroxide; alkyl aralkyl peroxides such as t-butyl cumyl peroxide and 1,4-bis(t-butylperoxyisopropyl)benzene; and alkyl aryl peroxides such as t-butyl perbenzoate, t-butyl peracetate, and t-butyl peroctoate.

The organic peroxide (C") can be a single peroxide or a mixture comprising two or more different organic peroxides. The concentration of the organic peroxide is typically from 0.1 to 5% (w/w), alternatively from 0.2 to 2% (w/w), based on the weight of the organopolysiloxane (A").

The free radical-curable silicone composition may be a two-part composition where the organopolysiloxane (A") and the free radical initiator (C") are in separate parts.

In other embodiments, at least one of the silicone compositions comprises a ring opening reaction-curable silicone composition. In various embodiments, the ring opening reaction-curable silicone composition comprises (A"') an organopolysiloxane having an average of at least two epoxy-substituted groups per molecule and (C‴) a curing agent. However, the ring opening reaction-curable silicone composition is not limited specifically to epoxy-functional organopolysiloxanes. Other examples of ring opening reaction-curable silicone compositions include those comprising silacyclobutane and/or benzocyclobutene.

The organopolysiloxane (A"') may be linear, branched, cyclic, or resinous. In particular, the organopolysiloxane (A"') may comprise any combination of M, D, T, and Q units, as with the organopolysiloxane (A') and the organosilicon compound (B') disclosed above.

The particular organopolysiloxane (A‴) may be selected based on desired properties of the 3D article and layers during the method. For example, it may be desirable for the layers to be in the form of an elastomer, a gel, a resin, etc., and selecting the components of the silicone composition allows one of skill in the art to achieve a range of desirable properties.

For example, in certain embodiments, the organopolysiloxane (A"') comprises a silicone resin, which typically comprises T and/or Q units in combination with M and/or D units. When the organopolysiloxane (A"') comprises a silicone resin, the silicone resin may be a DT resin, an MT resin, an MDT resin, a DTQ resin, an MTQ resin, an MDTQ resin, a DQ resin, an MQ resin, a DTQ resin, an MTQ resin, or an MDQ resin. Generally, when the hydrosilylation-curable silicone composition comprises a resin, the layer(s) and resulting 3D article have increased rigidity.

Alternatively, in other embodiments, the organopolysiloxane (A"') comprises repeating D units. Such organopolysiloxanes are substantially linear but may include some branching attributable to T and/or Q units. Alternatively, such organopolysiloxanes are linear. In these embodiments, the layer(s) and resulting 3D article are elastomeric.

The epoxy-substituted groups of the organopolysiloxane (A"') may be pendent, terminal, or in both positions. "Epoxy-substituted groups" are generally monovalent organic groups in which an oxygen atom, the epoxy substituent, is directly attached to two adjacent carbon atoms of a carbon chain or ring system. Examples of epoxy-substituted organic groups include, but are not limited to, 2,3-epoxypropyl, 3,4-epoxybutyl, 4,5-epoxypentyl, 2-glycidoxyethyl, 3-glycidoxypropyl, 4-glycidoxybutyl, 2-(3,4-epoxycylohexyl)ethyl, 3-(3,4-epoxycylohexyl)propyl, 2-(3,4-epoxy-3-methylcylohexyl)-2-methylethyl, 2-(2,3-epoxycylopentyl)ethyl, and 3-(2,3 epoxycylopentyl)propyl.

In a specific embodiment, the organopolysiloxane (A"') has the general formula:

$$(R^1R^52SiO_{1/2})_{w'''}(R^5_2SiO_{2/2})_{x'''}(R^5SiO_{3/2})_{y'''}(SiO_{4/2})_{z'''} \qquad (IV)$$

wherein each $R^1$ is defined above and each $R^5$ is independently selected from $R^1$ and an epoxy-substituted group, with the proviso that at least two of $R^5$ are epoxy-substituted groups, and w‴, x", y"', and z‴ are mole fractions such that w‴+x‴+y‴+z ‴=1. As understood in the art, for linear organopolysiloxanes, subscripts y‴ and z‴ are generally 0, whereas for resins, subscripts y‴ and/or z‴ >0. Various alternative embodiments are described below with reference to w"', x"', y‴ and z"'. In these embodiments, the subscript w‴ may have a value of from 0 to 0.9999, alternatively from 0 to 0.999, alternatively from 0 to 0.99, alternatively from 0 to 0.9, alternatively from 0.9 to 0.999, alternatively from 0.9 to 0.999, alternatively from 0.8 to 0.99, alternatively from 0.6 to 0.99, The subscript x‴ typically has a value of from 0 to 0.9, alternatively from 0 to 0.45, alternatively from 0 to 0.25. The subscript y‴ typically has a value of from 0 to 0.99, alternatively from 0.25 to 0.8, alternatively from 0.5 to 0.8. The subscript z‴ typically has a value of from 0 to 0.99, alternatively from 0 to 0.85, alternatively from 0.85 to 0.95, alternatively from 0.6 to 0.85, alternatively from 0.4 to 0.65, alternatively from 0.2 to 0.5, alternatively from 0.1 to 0.45, alternatively from 0 to 0.25, alternatively from 0 to 0.15.

The curing agent (C"') can be any curing agent suitable for curing the organopolysiloxane (A‴). Examples of curing agents (C"') suitable for that purpose include phenolic compounds, carboxylic acid compounds, acid anhydrides,

amine compounds, compounds containing alkoxy groups, compounds containing hydroxyl groups, or mixtures thereof or partial reaction products thereof. More specifically, examples of curing agents (C"') include tertiary amine compounds, such as imidazole; quaternary amine compounds; phosphorus compounds, such as phosphine; aluminum compounds, such as organic aluminum compounds; and zirconium compounds, such as organic zirconium compounds. Furthermore, either a curing agent or curing catalyst or a combination of a curing agent and a curing catalyst can be used as the curing agent (C‴). The curing agent (C"') can also be a photoacid or photoacid generating compound.

The ratio of the curing agent (C‴) to the organopolysiloxane (A‴) is not limited. In certain embodiments, this ratio is from 0.1-500 parts by weight of the curing agent (C"') per 100 parts by weight of the organopolysiloxane (A‴).

In other embodiments, at least one of the silicone compositions comprises a thiol-ene curable silicone composition. In these embodiments, the thiol-ene curable silicone composition typically comprises: (A"") an organopolysiloxane having an average of at least two silicon-bonded alkenyl groups or silicon-bonded mercapto-alkyl groups per molecule; (B"") an organosilicon compound having an average of at least two silicon-bonded mercapto-alkyl groups or silicon-bonded alkenyl groups per molecule capable of reacting with the silicon-bonded alkenyl groups or silicon-bonded mercapto-alkyl groups in the organopolysiloxane (A""); (C"") a catalyst; and (D"") an optional organic compound containing two or more mercapto groups. When the organopolysiloxane (A"") includes silicon-bonded alkenyl groups, the organosilicon compound (B"") and/or the organic compound (D"") include at least two mercapto groups per molecule bonded to the silicon and/or in the organic compound, and when the organopolysiloxane (A"") includes silicon-bonded mercapto groups, the organosilicon compound (B"") includes at least two silicon-bonded alkenyl groups per molecule. The organosilicon compound (B"") and/or the organic compound (D"") may be referred to as a cross-linker or cross-linking agent.

The catalyst (C"") can be any catalyst suitable for catalyzing a reaction between the organopolysiloxane (A"") and the organosilicon compound (B"") and/or the organic compound (D""). Typically, the catalyst (C⁗) is selected from: i) a free radical catalyst; ii) a nucleophilic reagent; and iii) a combination of i) and ii). Suitable free radical catalysts for use as the catalyst (C"") include photo-activated free radical catalysts, heat-activated free radical catalysts, room temperature free radical catalysts such as redox catalysts and alkylborane catalysts, and combinations thereof. Suitable nucleophilic reagents for use as the catalyst (C"") include amines, phosphines, and combinations thereof.

In still other embodiments, at least one of the silicone compositions comprises a silicon hydride-silanol reaction curable silicone composition. In these embodiments, the silicon hydride-silanol reaction curable silicone composition typically comprises: (A""') an organopolysiloxane having an average of at least two silicon-bonded hydrogen atoms or at least two silicone bonded hydroxyl groups per molecule; (B""') an organosilicon compound having an average of at least two silicon-bonded hydroxyl groups or at least two silicon bonded hydrogen atoms per molecule capable of reacting with the silicon-bonded hydrogen atoms or silicon-bonded hydroxyl groups in the organopolysiloxane (A′′′′′); (C′′′′′) a catalyst; and (D′′′′′) an optional active hydrogen containing compound. When the organopolysiloxane (A′′′′′) includes silicon-bonded hydrogen atoms, the organosilicon compound (B""') and/or the organic compound (D""') include at least two hydroxyl groups per molecule bonded to the silicon and/or in the active hydrogen containing compound, and when the organopolysiloxane (A′′′′′) includes silicon-bonded hydroxyl groups, the organosilicon compound (B""') includes at least two silicon-bonded hydrogen atoms per molecule. The organosilicon compound (B""') and/or the organic compound (D′′′′′) may be referred to as a cross-linker or cross-linking agent.

Typically, the catalyst (C′′′′′) is selected from: i) a Group X metal-containing catalyst such as platinum; ii) a base such as metal hydroxide, amine, or phosphine; and iii) combinations thereof.

Solidification conditions for such silicon hydride-silanol condensation-curable silicone compositions may vary. Typically, such compositions are mixed as a two-part system and subsequently cured under ambient conditions. However, heat may also be utilized during solidification.

Any of the silicone compositions may optionally and independently further comprise additional ingredients or components, especially if the ingredient or component does not prevent the organosiloxane of the composition from curing. Examples of additional ingredients include, but are not limited to, fillers; inhibitors; adhesion promoters; dyes; pigments; anti-oxidants; carrier vehicles; heat stabilizers; flame retardants; thixotroping agents; flow control additives; fillers, including extending and reinforcing fillers; and cross-linking agents. In various embodiments, the composition further comprises ceramic powder. The amount of ceramic powder can vary and may depend on the 3D printing process being utilized.

One or more of the additives can be present as any suitable wt.% of the particular silicone composition, such as about 0.1 wt.% to about 15 wt.%, about 0.5 wt.% to about 5 wt.%, or about 0.1 wt.% or less, about 1 wt.%, 2, 3, 4, 5, 6, 7, 8, 9, 10, 11, 12, 13, 14, or about 15 wt.% or more of the silicone composition.

In certain embodiments, the silicone compositions are shear thinning. Compositions with shear thinning properties may be referred to as psuedoplastics. As understood in the art, compositions with shear thinning properties are characterized by having a viscosity which decreases upon an increased rate of shear strain. Said differently, viscosity and shear strain are inversely proportional for shear thinning compositions. When the silicone compositions are shear thinning, the silicone compositions are particularly well suited for printing, especially when a nozzle or other dispense

mechanism is utilized. A specific example of a shear thinning silicone composition is XIAMETER® 9200 LSR, commercially available from Dow Silicones Corporation of Midland, MI.

In certain embodiments, at least one of the compositions, e.g. the substrate composition, the first composition, the second composition, and/or any subsequent or additional compositions, comprises the metal. The metal may be any of metal or alloy, and may be a liquid or slurry. Typically, a low-melting metal is used such that the at least one composition comprising the metal and/or the metal itself can be melted in an extruder and printed and/or deposited accordingly. In some embodiments, porous sections comprising the metal are formed during the printing process. Alternatively, sections comprising the metal which are not porous are formed during the printing process and may be incorporated as a section in the 3D article to add functionality (e.g. structural support, section separation, etc.). When the metal is a liquid, an appropriate solidification condition and/or mechanism is utilized. Such solidification conditions include sufficient cooling and forming a solid alloy with another material already presented on the substrate the liquid metal is being deposited onto. In some embodiments, the metal is a slurry of metal particles in a carrier such as water or a non-oxidizing solvent. The slurry can be printed into a porous section by itself, or as a nonporous section of an otherwise porous body. The printed section formed from slurry can be further processed, such as via laser melting, etching, and/or sintering.

In certain embodiments, at least one of the compositions, e.g. the substrate composition, the first composition, the second composition, and/or any subsequent or additional compositions, comprises the slurry. In one embodiment, the slurry is a ceramic slurry. The ceramic slurry may be carried by water, and may be combined with one or more binders, such as one of the resins described above. Typically, the ceramic slurry can be dried/solidified via evaporation of the carrier (e.g. water) and/or drying. The dried/solidified ceramic slurry can be further processed or consolidated by heating, such as via convection, heat conduction, or radiation. Ceramics that may be used to form the ceramic slurry include oxides of various metals, carbides, nitrides, borides, silicides, and combinations and/or modifications thereof. In some embodiments, as mentioned above, the slurry is a metal slurry. In these or other embodiments, the slurry comprises, alternatively is a resin slurry. The resin slurry is typically a solution or dispersion of a resin in water or an organic solvent. The resin slurry may comprise any suitable resin, such as one of the resins described above, and typically comprises a viscosity suitable for printing at ambient or elevated temperatures.

Any of the compositions may optionally and independently further comprise additional ingredients or components, especially if the ingredient or component does not prevent any particular component of the composition from curing. Examples of additional ingredients include: inhibitors; adhesion promoters; dyes; pigments; anti-oxidants; carrier vehicles; heat stabilizers; flame retardants; thixotroping agents; flow control additives; fillers, including extending and reinforcing fillers; and cross-linking agents. In various embodiments, the composition further comprises ceramic powder. The amount of ceramic powder can vary and may depend on the 3D printing process being utilized.

Each of the additives can be present at any suitable wt.% of the particular composition, such as about 0.1 wt.% to about 15 wt.%, about 0.5 wt.% to about 5 wt.%, or about 0.1 wt.% or less, about 1 wt.%, 2, 3, 4, 5, 6, 7, 8, 9, 10, 11, 12, 13, 14, or about 15 wt.% or more of the particular composition.

In certain embodiments, the compositions are shear thinning. Compositions with shear thinning properties may be referred to as psuedoplastics. As understood in the art, compositions with shear thinning properties are characterized by having a viscosity which decreases upon an increased rate of shear strain. Said differently, viscosity and shear strain are inversely proportional for shear thinning compositions. When the compositions are shear thinning, the compositions are particularly well suited for printing, especially when a nozzle or other dispense mechanism is utilized. A specific example of a shear-thinning composition comprising a silicone composition is XIAMETER® 9200 LSR, commercially available from Dow Silicones Corporation of Midland, MI.

Any of the compositions described above may be a single part or a multi-part composition, as described above with reference to certain silicone compositions. Certain compositions are highly reactive such that multi-part compositions prevent premature mixing and curing of the components. The multi-part composition may be, for example, a two-part system, a three-part system, etc. contingent on the selection of the composition and the components thereof. Any component of the composition may be separate from and individually controlled with respect to the remaining components.

In certain embodiments, when the compositions are multi-part compositions, the separate parts of the multi-part composition may be mixed in a dispense printing nozzle, e.g. a dual dispense printing nozzle, prior to and/or during printing. Alternatively, the separate parts may be combined immediately prior to printing. Alternatively still, the separate parts may be combined after exiting the nozzle, e.g. by crossing printing streams or by mixing the separate parts as the layers are formed.

The compositions can be of various viscosities, such as any of the dynamic viscosities described above in relation to the first composition. In certain embodiments, the viscosity of the composition is further defined as a kinematic viscosity, and is less than 500, less than 250, or less than 100, centistokes (cSt) at 25 °C, where 1 cSt = 1 $mm^2 \cdot s^{-1}$ = $10^{-6}$ $m^2 \cdot s^{-1}$. In some embodiments, the composition comprises a kinematic viscosity of from 1 to 1,000,000, from 1 to 100,000, or from 1 to 10,000 cSt at 25 °C. Viscosity of each composition can be changed by altering the amounts and/or molecular weight of one or more components thereof. Viscosity may be adjusted to match components of the nozzle or apparatus, particularly any nozzle or dispensing mechanism, to control heat, speed or other parameters associated with printing. As readily

understood in the art, dynamic and/or kinematic viscosity may be measured in accordance with various methods and techniques, such as those set forth in ASTM D-445

(2011), titled "Standard Test Method for Kinematic Viscosity of Transparent and Opaque Liquids (and Calculation of Dynamic Viscosity);" ASTM D-7483 (2017), titled "Standard Test Method for Determination of Dynamic Viscosity and Derived Kinematic Viscosity of Liquids by Oscillating Piston Viscometer;" ASTM D-7945 (2016), titled "Standard Test Method for Determination of Dynamic Viscosity and Derived Kinematic Viscosity of Liquids by Constant Pressure Viscometer;" and/or ASTM D7042 (2016), titled "Standard Test Method for Dynamic Viscosity and Density of Liquids by Stabinger Viscometer (and the Calculation of Kinematic Viscosity);" and the like, as well as modifications and/or combinations thereof.

As will be appreciated from the disclosure herein, the compositions may be in any form suitable for printing and, subsequently, for solidification after printing. Accordingly, each composition utilized may independently be in a liquid, solid, or semi-solid form. For example, each composition may be utilized as a liquid suitable for forming streams and/or droplets, a powder, and/or a heat-meltable solid, depending on the particular composition and printing conditions selected and as described above.

As described above with respect to the first composition in particular, the elastic modulus of suitable examples of the composition is varied, and may change over time, e.g. due to curing, crosslinking, and/or hardening of the composition, including during the method. Typically, the elastic modulus of the composition is in the range of from 0.01 to 5000 MPa, such as from 0.1 to 150, from 0.1 to 125, from 0.2 to 100, from 0.2 to 90, from 0.2 to 80, from 0.3 to 80, from 0.3 to 70, from 0.3 to 60, from 0.3 to 50, from 0.3 to 45, from 0.4 to 40, or from 0.5 to 10 MPa. These ranges may apply to the elastic modulus of the composition at any time, such as before printing, during printing, and/or after printing. Moreover, more than one of such ranges may apply to the composition, e.g. when the elastic modulus of the composition changes over time (e.g. during and/or after printing). In certain embodiments, the composition has an elastic modulus of less than 120, alternatively less than 110, alternatively less than 100, alternatively less than 90, alternatively less than 80, alternatively less than 70, alternatively less than 60, alternatively less than 50, alternatively less than 40, alternatively less than 30 MPa during printing. As readily understood in the art, elastic modulus may be measured in accordance with various methods and techniques, such as those set forth in ASTM D638 (2014), titled "Standard Test Method for Tensile Properties of Plastics," and the like, as well as via modifications and/or combinations thereof.

When the solidification condition comprising heating, exposure to the solidification condition typically comprises heating the layer(s) at an elevated temperature for a period of time. The elevated temperature and the period of time may vary based on numerous factors, including the selection of the particular silicone composition, a desired cross-link density of the at least partially solidified layer, dimensions of the layer(s), etc. In certain embodiments, the elevated temperature is from above room temperature to 500, alternatively from 30 to 450, alternatively from 30 to 350, alternatively from 30 to 300, alternatively from 30 to 250, alternatively from 40 to 200, alternatively from 50 to 150, °C. In these or other embodiments, the period of time is from 0.001 to 600, alternatively from 0.04 to 60, alternatively from 0.1 to 10, alternatively from 0.1 to 5, alternatively from 0.2 to 2, minutes.

Any source of heat may be utilized for exposing the layer(s) to heat. For example, the source of heat may be a convection oven, rapid thermal processing, a hot bath, a hot plate, or radiant heat. Further, if desired, a heat mask or other similar device may be utilized for selective curing of the layer(s), as introduced above.

In certain embodiments, heating is selected from (i) conductive heating via a substrate on which the layer is printed; (ii) heating the silicone composition via the 3D printer or a component thereof; (iii) infrared heating; (iv) radio frequency or micro-wave heating; (v) a heating bath with a heat transfer fluid; (vi) heating from an exothermic reaction of the silicone composition; (vii) magnetic heating; (viii) oscillating electric field heating; and (ix) combinations thereof. When the method includes more than one heating step, e.g. in connection with each individual layer, each heating step is independently selected.

Such heating techniques are known in the art. For example, the heat transfer fluid is generally an inert fluid, e.g. water, which may surround and contact the layer as the silicone composition is printed, thus initiating at least partial curing thereof. With respect to (ii) heating the silicone composition via the 3D printer or a component thereof, any portion of the silicone composition may be heated and combined with the remaining portion, or the silicone composition may be heated in its entirety. For example, a portion (e.g. one component) of the silicone composition may be heated, and, once combined with the remaining portion, the silicone composition initiates curing. The combination of the heated portion and remaining portion may be before, during, and/or after the step of printing the silicone composition. The components may be separately printed.

Alternatively or in addition, the solidification condition may be exposure to irradiation.

The energy source independently utilized for the irradiation may emit various wavelengths across the electromagnetic spectrum. In various embodiments, the energy source emits at least one of ultraviolet (UV) radiation, microwave radiation, radiofrequency radiation, infrared (IR) radiation, visible light, X-rays, gamma rays, oscillating electric field, or electron beams (e-beam). One or more energy sources may be utilized.

In certain embodiments, the energy source emits at least UV radiation. In physics, UV radiation is traditionally

divided into four regions: near (400-300 nm), middle (300-200 nm), far (200-100 nm), and extreme (below 100 nm). In biology, three conventional divisions have been observed for UV radiation: near (400-315 nm); actinic (315-200 nm); and vacuum (less than 200 nm). In specific embodiments, the energy source emits UV radiation, alternatively actinic radiation. The terms of UVA, UVB, and UVC are also common in industry to describe the different wavelength ranges of UV radiation.

In certain embodiments, the radiation utilized to cure the layer(s) may have wavelengths outside of the UV range. For example, visible light having a wavelength of from 400 nm to 800 nm can be used. As another example, IR radiation having a wavelength beyond 800 nm can be used.

In other embodiments, e-beam can be utilized to cure the layer(s). In these embodiments, the accelerating voltage can be from about 0.1 to about 10 MeV, the vacuum can be from about 10 to about $10^{-3}$ Pa, the electron current can be from about 0.0001 to about 1 ampere, and the power can vary from about 0.1 watt to about 1 kilowatt. The dose is typically from about 100 micro-coulomb/$cm^2$ to about 100 coulomb/$cm^2$, alternatively from about 1 to about 10 coulombs/$cm^2$. Depending on the voltage, the time of exposure is typically from about 10 seconds to 1 hour; however, shorter or longer exposure times may also be utilized.

The 3D article formed in accordance to the method is not limited, and may be any 3D article formable using an AM process suitable for practicing the method of this disclosure. Typically, the 3D article comprises flexible components and/or thin walls, such as those formed using the deformable compositions of this disclosure. For example, in certain embodiments the 3D article is a pneumatic actuator that is may bend, move, or otherwise flex in response to a pneumatic force (e.g. air pressure) being applied thereto. In these or other embodiments, the 3D article is a biological (e.g. medical and/or dental) device. In such embodiments, the 3D article may advantageously be formed using the flexible silicone compositions of this disclosure, e.g. due to their high biocompatibility. Example of such medical devices include prostheses, tubing (e.g. feeding tubes), drains, catheters, implants (e.g. long-term and/or short term), seals, gaskets, syringe pistons, dental guards, etc.

The following examples, illustrating methods and 3D articles formed thereby, are intended to illustrate and not to limit the invention. The scope of the invention is defined by the appended claims.

General Procedure:

In each of the Examples below, a 3D article is formed in accordance with method of the invention. Specifically, the 3D article is formed with an apparatus shown generally at 10 in Figure 3. More specifically, the apparatus 10 includes a nozzle 12 (SmoothFlow™ Tapered Tip, available from Nordson Corporation of Weslake, Ohio) having an internal diameter (di) and connected to a motion-controlling robot 37 (prismatic-input delta robotic 3D-printer motion control platform, based on an open-source FDM machine (Rostock MaxTM V3 by SeeMeCNC®, Goshen, Indiana, USA)). The nozzle 12 is also connected to a dispenser 36 (formed from Optimum syringe barrels by Nordson EFD, Westlake, Ohio, which are pressurized to 70±10 kPa and feed to a progressive cavity pump 38 (Preeflow eco-PEN 450) controlled by a controller 34 (Model EC200 controller by Viscotec, Töging am Inn, Germany). A first composition (DOWSIL™ 737 Neutral Cure Sealant, an oxime cure silicone sealant, available from Dow Silicones Corporation of Midland, Michigan) (not shown) is introduced to the dispenser 36 and printed onto a substrate 18 (an already printed deformable substrate formed with the first composition on a polylactic acid top plate) with the nozzle 12 of the apparatus 10 to form a deformable first filament (not shown). During printing of the first composition, the deformable substrate and the nozzle are spaced apart by a selectively controlled distance (i.e., nozzle height (t)), at least one of the substrate and the nozzle is moved at a selectively controlled speed (i.e., nozzle speed (v)) relative to the other, and the volumetric flow rate (Q) is selectively controlled, to give a first layer (not shown). The first layer is then exposed to a solidification condition to form the 3D article.

**Examples 1-9:**

3D articles are prepared according to the General Procedure Above. Table 2 below sets forth the various parameters utilized in Examples 1-9:

Table 2:

| Example | Nozzle Internal Diameter (di) (mm) | Nozzle Height (t) (mm) |
|---|---|---|
| **1** | 0.41 | 0.20 |
| **2** | 0.41 | 0.15 |
| **3** | 0.41 | 0.10 |
| **4** | 0.25 | 0.20 |
| **5** | 0.25 | 0.15 |

(continued)

| Example | Nozzle Internal Diameter (di) (mm) | Nozzle Height (t) (mm) |
|---|---|---|
| **6** | 0.25 | 0.10 |
| **7** | 0.20 | 0.20 |
| **8** | 0.20 | 0.15 |
| **9** | 0.20 | 0.10 |

In each of Examples 1-9, the base substrate is supported by a build plate 19 (polylactic acid base plate 20 supported by a 25.83 mm x 0.82 mm brass cantilevered beam 21 equipped with a mirror 23), as shown in Figure 3, during performance of the General Procedure above. Displacement of the cantilever beam caused by printing the first composition (e.g. DOWSIL™ 737 Neutral Sealant) is measured by a laser beam (via laser displacement sensor 30 (Model LK-G10 by Keyence, Itasca, Illinois, USA) connected to a display panel 32 (Model LK-GD500 by Keyence, Itasca, Illinois)), recorded (via LK-Navigator software (Keyence)), and converted into a deformation force measurement. In particular, displacement in a direction of movement of the nozzle is converted to a tangential force, and displacement caused in a direction perpendicular to the direction of movement of the nozzle is converted into a normal force. The results of the deformation force measurements are set forth in Figures 4 and 5.

In particular, Figure 4 provides the measured average and standard deviation of the total tangential force (Ft) as a function of the volumetric flow rate (Q), as controlled by varying the nozzle internal diameter (di) and the nozzle height (t) during printing the first compositions of Examples 1-9.

Figure 5 provides the measured average and standard deviation of the total normal force ($F_n$) as a function of the volumetric flow rate (Q), as controlled by varying the nozzle internal diameter (di) and the nozzle height (t) during printing the first compositions of Examples 1-9.

As shown in Figures 4 and 5, the deformation force ($F_t$ + $F_n$) applied by the nozzle to the substrate is reduced during printing the first composition by controlling the volumetric flow rate (Q).

**Examples 10-13:**

3D articles are prepared according to the General Procedure above. Table 2 below sets forth the various parameters utilized in Examples 10-13:

| Example | Nozzle Internal Diameter (di) (mm) | Nozzle Height (t) (mm) | Volumetric Flow Rate (Q) (ml/min) |
|---|---|---|---|
| **10** | 0.25 | 0.15 | 0.22 |
| **11** | 0.25 | 0.15 | 0.28 |
| **12** | 0.25 | 0.15 | 0.34 |
| **13** | 0.25 | 0.15 | 0.40 |

In each of Examples 10-13, the first composition is printed onto the base substrate to successive layers, such that the top-most layer being printed upon is the deformable substrate. A high-speed camera (Model FASTCAM-1024PCI by Photron) is utilized to capture images to observe the nozzle during printing the first composition. Cross-sections of each of the 3D articles prepared in Examples 10-13 are then taken after curing and photographed to provide cross-sectional images. The captured and cross sectional images of Examples 10-13 are shown in Figure 6.

As shown in Figure 6, the deformation force ($F_t$ + $F_n$) applied by the nozzle to the substrate is reduced during printing the first composition by controlling the volumetric flow rate (Q). More specifically, in the particular embodiments exemplified in Examples 10-13, at a given internal diameter (di) and nozzle height (t), reducing the volumetric flow rate (Q) is shown to reduce the deformation force (e.g. the total tangential force (Ft)) applied to the deformable substrate by the nozzle

A width of the cross-sections of the 3D articles prepared in Examples 10-13 are also measured, and set forth in Table 3 below:

Table 3:

| Example | Cross-sectional Width (mm) |
|---|---|
| **10** | 1.2 |

(continued)

| Example | Cross-sectional Width (mm) |
|---|---|
| **11** | 1.57 |
| **12** | 1.8 |
| **13** | 2.24 |

As demonstrated by Example 10, the observed tangential force (Ft) is reduced at a given internal diameter (di) and nozzle height (t) when the volumetric flow rate (Q) is set to 0.22 ml/min and below. As shown in Figure 6 and Table 3, the width of wall of the article formed in Example 10 is the thinnest, about 1.20 mm, among all four volumetric flow rates (Q) utilized in Examples 10-13. When Q is further increased to 0.28 ml/min (Example 11) with other process parameters held constant, a distinct increase in Ft is observed. As shown in Figure 6, the back edge of the nozzle is slightly dragged through the first composition printed onto the deformable substrate during forming the 3D article of Example 11. Additionally, the width of the wall of the article formed in Example 11 is increased to 1.57 mm, as compared to the 1.20 mm wall width measured in Example 10, as shown in Table 3.

Likewise, when Q is further increased to 0.34 ml/min in Example 12, another distinct increase in Ft is observed (as compared to Examples 10 and 11). As shown in Figure 6, a greater area of the back edge of the nozzle is dragged through the first composition printed onto the deformable substrate during forming the 3D article of Example 12, as compared to Example 11. Additionally, the width of the wall of the article formed in Example 12 is increased to 1.8 mm, as compared to the 1.57 mm wall width measured in Example 11. Finally, when Q increased to the highest level, 0.40 ml/min, in Example 13, the greatest increase in Ft is observed between Examples 10-13. As shown in Figure 6, the nozzle is dragging through the first composition during printing the 3D article of Example 13, such that an amount of the first composition builds up around the nozzle (e.g. in front and at the sides thereof. ) during printing. Moreover, the width of the wall of the article formed in Example 13 is 2.24, as shown in Table 3, which is the greatest width among all the four volumetric flow rates (Q) utilized in Exampled 10-13.

**Example 14**

A hollow hand (i.e., 3D article) is prepared according to the General Procedure above, where:

the inner diameter of the nozzle (di) is 0.25 mm;
the nozzle height (t) is 0.21 mm;
the nozzle speed (v) is 20 mm/s; and
volumetric flow rate (Q) is 0.28.

More specifically, shown in Figure 7, the hollow hand of Example 14 is formed to 120 mm tall using two-line walls to form a palm portion of the hand and single-line walls to from fingers of the hand. The two-line walls of the palm portion provide a stable base for support-less bridging and the single-line walls of the fingers minimize over-extrusion during printing the tips thereof.

It is to be understood that the appended claims are not limited to express and particular compounds, compositions, or methods described in the detailed description, which may vary between particular embodiments which fall within the scope of the appended claims. With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

Further, any ranges and subranges relied upon in describing various embodiments of the present disclosure independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present disclosure, and such ranges and subranges may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another

example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1, which may be relied upon and provide adequate support for specific embodiments within the scope of the appended claims.

## Claims

**1.** A method of forming a three-dimensional, 3D, article with an apparatus having a nozzle (12), said method comprising:

(I) printing a first composition (14) on a deformable substrate (18) with the nozzle of the apparatus at a volumetric flow rate to form a deformable first filament comprising the first composition on the deformable substrate, wherein at least one of the nozzle and the deformable substrate is moved relative to the other during printing;
(II) controlling the volumetric flow rate to reduce a deformation force applied by the nozzle to the deformable substrate and give a first layer comprising the deformable first filament on the deformable substrate;
optionally, repeating (I) and (II) with independently selected composition(s) to form any additional deformable filament(s) and corresponding layer(s); and
(III) exposing the layer(s) to a solidification condition
wherein (II) controlling the volumetric flow rate further comprises:

(II-A) measuring the deformation force applied by the nozzle to the deformable substrate during printing;
(II-B) comparing the deformation force measured in (II-A) to a predetermined deformation force threshold; and
(II-C) adjusting the volumetric flow rate to reduce the deformation force applied by the nozzle to the deformable substrate in response to the deformation force measured in (II-A) exceeding the predetermined deformation force threshold until the deformation force subceeds the predetermined deformation force threshold

**2.** The method of claim 1, wherein the deformation force comprises at least one of a normal force and a tangential force, and wherein controlling the volumetric flow rate to reduce the deformation force applied by the nozzle to the deformable substrate comprises: (i) minimizing contact between a tip of the nozzle and the deformable first filament once formed on the deformable substrate; (ii) matching a distance between the tip of the nozzle and the deformable substrate with (a) a dimension of the first composition being printed with the nozzle, (b) a dimension of the nozzle, or (c) both (a) and (b); or (iii) both (i) and (ii).

**3.** The method of claim 1 or 2, wherein controlling the volumetric flow rate comprises selectively controlling at least one of: (i) a flow rate at which the first composition is expelled from the nozzle during printing; (ii) a distance between the deformable substrate and the nozzle during printing; (iii) a speed at which at least one of the deformable substrate and the nozzle is moved relative to the other; (iv) a size and/or shape of the nozzle; and (v) a shape of the deformable substrate.

**4.** The method of claim 3, further comprising first plotting for the volumetric flow rate in (I) as a function of the flow rate, distance, speed, nozzle size and/or shape, and/or the shape of the deformable substrate for establishing parameters to control the volumetric flow rate to reduce the deformation force applied by the nozzle to the deformable substrate.

**5.** The method of claim 3 or 4, further comprising determining a desired width and/or shape of the deformable first filament comprising the first composition, and selectively controlling at least one of the flow rate, distance, speed, and nozzle size and/or shape such that the deformable first filament is formed to the desired width and/or the shape on the deformable substrate.

**6.** The method of claim of any one preceding claim, further comprising:

(II-D) integrating in real time the deformation force measurement of (II-A), the volumetric flow rate adjustment of (II-C), and the deformation force reduction of (II-C) into a closed loop feedback controller in communication with the apparatus; and

(II-E) subsequently controlling the volumetric flow rate with the closed loop feedback control mechanism.

7. The method of any one preceding claim, further comprising:

IV) printing a second composition with the nozzle of the apparatus at a second volumetric flow rate to form a second deformable filament comprising the second composition on the deformable first filament of the first layer; and
V) controlling the second volumetric flow rate to reduce the deformation force applied by the nozzle to the deformable first filament of the first layer and give a second layer comprising the second deformable filament on the first layer.

8. The method of claim 7, wherein: (i) the first composition has a skin-over time greater than a print time of the first layer, and wherein the second deformable filament is formed on the first layer within the skin-over time of the first composition; (ii) the first and second filaments are the same and continuous with one another; or (iii) both (i) and (ii).

9. The method of any one preceding claim, wherein: (i) the deformable substrate comprises an initial layer comprising an initial filament formed by printing; (ii) the first composition has an elastic modulus of less than 100 MPa during and/or after printing; or (iii) both (i) and (ii).

10. The method of any one of claims 7-9, wherein: (i) the first and second compositions are the same as one another; (ii) the first and/or second compositions are independently selected curable compositions; or (iii) both (i) and (ii).

11. The method of any one preceding claim, wherein (III) is performed: (i) simultaneously with and/or after (I) and (II) but prior to optionally repeating (I) and (II); (ii) after repeating (I) and (II) with independently selected compositions; or (iii) both (i) and (ii).

12. The method of any one preceding claim, wherein the solidification condition is selected from: (i) exposure to moisture; (ii) exposure to heat; (iii) exposure to irradiation; (iv) reduced ambient temperature; (v) exposure to solvent; (vi) exposure to mechanical vibration; (vii) exposure to oxygen; or (viii) a combination of (i) to (vi).

13. The method according to any one preceding claim, wherein: (i) the apparatus comprises a 3D printer; or (ii) the apparatus comprises a 3D printer selected from a fused filament fabrication printer, a fused deposition modeling printer, a direct ink deposition printer, a liquid additive manufacturing printer, a material jet printer, a polyjet printer, a material jetting printer, and a syringe extrusion printer.

## Patentansprüche

1. Verfahren zum Bilden eines dreidimensionalen (3D) Artikels mit einer Einrichtung, die eine Düse (12) aufweist, wobei das Verfahren umfasst:

(I) Drucken einer ersten Zusammensetzung (14) auf ein verformbares Substrat (18), mit der Düse der Einrichtung bei einem Volumendurchfluss zur Ausbildung eines verformbaren ersten Filaments, das die erste Zusammensetzung umfasst, auf dem verformbaren Substrat, wobei während des Druckens mindestens eine(s) von der Düse und dem verformbaren Substrat relativ zum anderen bewegt wird;
(II) Steuern des Volumendurchflusses, um die von der Düse auf das verformbare Substrat ausgeübte Verformungskraft zu reduzieren und eine erste Schicht, die das verformbare erste Filament umfasst, auf dem verformbaren Substrat, zu ergeben;
wahlweise Wiederholen von (I) und (II) mit unabhängig ausgewählter/ausgewählten Zusammensetzung(en), um zusätzliches verformbares Filament/zusätzliche verformbare Filamente und (eine) entsprechende Schicht(en) auszubilden; und
(III) Aussetzen der Schicht(en) einer Verfestigungsbedingung,

wobei (II) das Steuern des Volumendurchflusses ferner umfasst:

(II-A) Messen der Verformungskraft, die während des Druckens von der Düse auf das verformbare Substrat ausgeübt wird;
(II-B) Vergleichen der bei (II-A) gemessenen Verformungskraft mit einem vorbestimmten Verformungskraftschwellenwert und
(II-C) Einstellen des Volumendurchflusses als Reaktion darauf, dass die bei (II-A) gemessene Verformungskraft den vorbestimmten Verformungskraftschwellenwert überschreitet, um die von der Düse auf das verformbare Substrat ausgeübte Verformungskraft zu reduzieren, bis sie den vorbestimmten Verformungskraftschwellenwert unterschreitet.

**2.** Verfahren nach Anspruch 1, wobei die Verformungskraft mindestens eine von einer Normalkraft und einer Tangentialkraft umfasst und wobei das Steuern des Volumendurchflusses, um die von der Düse auf das verformbare Substrat ausgeübte Verformungskraft zu reduzieren, umfasst: (i) Minimieren des Kontakts zwischen einer Spitze der Düse und dem verformbaren ersten Filament, sobald es auf dem verformbaren Substrat ausgebildet ist; (ii) Anpassen des Abstandes zwischen der Spitze der Düse und dem verformbaren Substrat an (a) eine Abmessung der ersten Zusammensetzung, die gerade mit der Düse gedruckt wird, (b) eine Abmessung der Düse oder (c) sowohl (a) als auch (b) oder (iii) sowohl (i) als auch (ii).

**3.** Verfahren nach Anspruch 1 oder 2, wobei das Steuern des Volumendurchflusses das selektive Steuern mindestens einer der folgenden Kenngrößen umfasst: (i) Durchfluss, mit dem die erste Zusammensetzung während des Druckens aus der Düse ausgestoßen wird; (ii) Abstand zwischen dem verformbaren Substrat und der Düse während des Druckens; (iii) Geschwindigkeit, mit der mindestens eine(s) von dem verformbaren Substrat und der Düse relativ zur/zum anderen bewegt wird; (iv) Größe und/oder Form der Düse und (v) Form des verformbaren Substrats.

**4.** Verfahren nach Anspruch 3, ferner umfassend, zunächst den Volumendurchfluss bei (I) als Funktion des Durchflusses, des Abstandes, der Geschwindigkeit, der Düsengröße und/oder -form und/oder der Form des verformbaren Substrats aufzuzeichnen, um Parameter zur Steuerung des Volumendurchflusss festzulegen, um die von der Düse auf das verformbare Substrat ausgeübte Verformungskraft zu reduzieren.

**5.** Verfahren nach Anspruch 3 oder 4, ferner umfassend: Bestimmen einer gewünschten Breite und/oder Form des verformbaren ersten Filaments, das die erste Zusammensetzung umfasst, und selektives Steuern mindestens einer der Kenngrößen Durchfluss, Abstand, Geschwindigkeit und Düsengröße und/oder -form, so dass das verformbare erste Filament mit der gewünschten Breite und/oder Form auf dem verformbaren Substrat ausgebildet wird.

**6.** Verfahren nach einem der vorstehenden Ansprüche, ferner umfassend:

(II-D) Integrieren, in Echtzeit, der Verformungskraftmessung von (II-A), der Volumendurchflusseinstellung von (II-C) und der Verformungskraftreduzierung von (II-C) in einen Regler mit geschlossenem Regelkreis in Kommunikation mit der Einrichtung; und
(II-E) anschließendes Steuern des Volumendurchflusses mit dem Regelmechanismus mit geschlossenem Regelkreis.

**7.** Verfahren nach einem der vorstehenden Ansprüche, ferner umfassend:

IV) Drucken einer zweiten Zusammensetzung mit der Düse der Einrichtung bei einem zweiten Volumendurchfluss zur Ausbildung eines zweiten verformbaren Filaments, das die zweite Zusammensetzung umfasst, auf dem verformbaren ersten Filament der ersten Schicht; und
V) Steuern des zweiten Volumendurchflusses, um die von der Düse auf das verformbare erste Filament der ersten Schicht ausgeübte Verformungskraft zu reduzieren und eine zweite Schicht, die das zweite verformbare Filament umfasst, auf der ersten Schicht, zu ergeben.

**8.** Verfahren nach Anspruch 7, wobei (i) die erste Zusammensetzung eine Hautbildungszeit aufweist, die länger als die Zeit zum Drucken der ersten Schicht ist, und wobei das zweite verformbare Filament auf der ersten Schicht innerhalb der Hautbildungszeit der ersten Zusammensetzung ausgebildet wird; (ii) das erste und das zweite Filament gleich sind und durchgehend miteinander verbunden sind oder (iii) sowohl (i) als auch (ii).

**9.** Verfahren nach einem der vorstehenden Ansprüche, wobei (i) das verformbare Substrat eine Anfangsschicht umfasst, die ein durch Drucken ausgebildetes Anfangsfilament umfasst; (ii) die erste Zusammensetzung während und/oder nach dem Drucken einen Elastizitätsmodul von weniger als 100 MPa aufweist oder (iii) sowohl (i) als auch (ii).

**10.** Verfahren nach einem der Ansprüche 7 bis 9, wobei (i) die erste und die zweite Zusammensetzung gleich sind; (ii) die

erste und/oder die zweite Zusammensetzung unabhängig voneinander ausgewählte härtbare Zusammensetzungen sind; oder (iii) sowohl (i) als auch (ii).

**11.** Verfahren nach einem der vorstehenden Ansprüche, wobei (III) wie folgt durchgeführt wird: (i) gleichzeitig mit und/oder nach (I) und (II), aber vor dem wahlweisen Wiederholen von (I) und (II); (ii) nach dem Wiederholen von (I) und (II) mit unabhängig voneinander ausgewählten Zusammensetzungen oder (iii) sowohl (i) als auch (ii).

**12.** Verfahren nach einem der vorstehenden Ansprüche, wobei die Verfestigungsbedingung ausgewählt ist aus: (i) Feuchtigkeitsexposition; (ii) Wärmeexposition; (iii) Bestrahlung; (iv) reduzierter Umgebungstemperatur; (v) Lösungsmittelexposition; (vi) Exposition gegenüber mechanischen Schwingungen; (vii) Sauerstoffexposition oder (viii) einer Kombination von (i) bis (vi).

**13.** Verfahren nach einem der vorstehenden Ansprüche, wobei (i) die Einrichtung einen 3D-Drucker umfasst oder (ii) die Einrichtung einen 3D-Drucker umfasst, der ausgewählt ist aus einem Fused-Filament-Fabrication-Drucker, einem Fused-Deposition-Modeling-Drucker, einem Direct-Ink-Deposition-Drucker, einem Liquid-Additive-Manufacturing-Drucker, einem Materialstrahl-Drucker, einem PolyJet-Drucker, einem Material-Jetting-Drucker und einem Spritzenextrusion-Drucker.

## Revendications

**1.** Procédé de formation d'un article tridimensionnel, 3D, à l'aide d'un appareil muni d'une buse (12), ledit procédé comprenant :

(I) l'impression d'une première composition (14) sur un substrat déformable (18) avec la buse de l'appareil à un débit volumétrique pour former un premier filament déformable comprenant la première composition sur le substrat déformable, dans lequel au moins l'un parmi la buse et le substrat déformable est déplacé l'un par rapport à l'autre pendant l'impression ;
(II) la commande du débit volumétrique pour réduire la force de déformation appliquée par la buse au substrat déformable et donner une première couche comprenant le premier filament déformable sur le substrat déformable ;
éventuellement, la répétition de (I) et (II) avec une ou des compositions choisies indépendamment pour former un ou des filaments déformables supplémentaires et une ou des couches correspondantes ; et
(III) l'exposition de la ou des couches à une condition de solidification

dans lequel (II) la commande du débit volumétrique comprend en outre :

(II-A) la mesure de la force de déformation appliquée par la buse au substrat déformable pendant l'impression ;
(II-B) la comparaison de la force de déformation mesurée en (II-A) à un seuil de force de déformation prédéterminé ; et
(II-C) le réglage du débit volumétrique pour réduire la force de déformation appliquée par la buse au substrat déformable en réponse à la force de déformation mesurée en (II-A) dépassant le seuil de force de déformation prédéterminé jusqu'à ce que la force de déformation repasse sous le seuil de force de déformation prédéterminé

**2.** Procédé selon la revendication 1, dans lequel la force de déformation comprend au moins l'une parmi une force normale et une force tangentielle, et dans lequel la commande du débit volumétrique pour réduire la force de déformation appliquée par la buse au substrat déformable comprend : (i) la minimisation du contact entre l'extrémité de la buse et le premier filament déformable une fois formé sur le substrat déformable ; (ii) la mise en correspondance d'une distance entre l'extrémité de la buse et le substrat déformable avec (a) une dimension de la première composition imprimée avec la buse, (b) une dimension de la buse, ou (c) à la fois (a) et (b) ; ou (iii) à la fois (i) et (ii).

**3.** Procédé selon la revendication 1 ou 2, dans lequel la commande du débit volumétrique comprend la commande sélective d'au moins l'un parmi : (i) un débit auquel la première composition est expulsée de la buse pendant l'impression ; (ii) une distance entre le substrat déformable et la buse pendant l'impression ; (iii) une vitesse à laquelle au moins l'un parmi le substrat déformable et la buse est déplacé l'un par rapport à l'autre ; (iv) une taille et/ou forme de la buse ; et (v) une forme du substrat déformable.

**4.** Procédé selon la revendication 3, comprenant en outre un premier flashage pour le débit volumétrique en (I) comme

fonction du débit, de la distance, de la vitesse, de la taille et/ou de la forme de buse, et/ou de la forme du substrat déformable pour établir les paramètres de commande du débit volumétrique afin de réduire la force de déformation appliquée par la buse au substrat déformable.

**5.** Procédé selon la revendication 3 ou 4, comprenant en outre la détermination d'une largeur et/ou d'une forme souhaitée du premier filament déformable comprenant la première composition, et la commande sélective d'au moins l'un parmi le débit, la distance, la vitesse, et la taille et/ou la forme de buse, de telle sorte que le premier filament déformable est formé à la largeur et/ou à la forme souhaitée sur le substrat déformable.

**6.** Procédé selon la revendication de l'une quelconque revendication précédente, comprenant en outre :

(II-D) l'intégration en temps réel de la mesure de force de déformation de (II-A), le réglage du débit volumétrique de (II-C) et la réduction de force de déformation de (II-C) dans un dispositif de commande de rétroaction en boucle fermée en communication avec l'appareil ; et
(II-E) par la suite la commande du débit volumétrique à l'aide d'un mécanisme de commande de rétroaction en boucle fermée.

**7.** Composition selon l'une quelconque revendication précédente, comprenant en outre :

IV) l'impression d'une seconde composition avec la buse de l'appareil à un second débit volumétrique pour former un second filament déformable comprenant la seconde composition sur le premier filament déformable de la première couche ; et
V) la commande du second débit volumétrique pour réduire la force de déformation appliquée par la buse au premier filament déformable de la première couche et donner une seconde couche comprenant le second filament déformable sur la première couche.

**8.** Procédé selon la revendication 7, dans lequel : (i) la première composition présente un temps de séchage supérieur au temps d'impression de la première couche, et le second filament déformable est formé sur la première couche pendant le temps de séchage de la première composition ; (ii) les premier et second filaments sont identiques et continus l'un par rapport à l'autre ; ou (iii) à la fois (i) et (ii).

**9.** Procédé selon l'une quelconque revendication précédente, dans lequel : (i) le substrat déformable comprend une couche initiale comprenant un filament initial formé par impression ; (ii) la première composition présente un module d'élasticité inférieur à 100 MPa pendant et/ou après l'impression ; ou (iii) à la fois (i) et (ii).

**10.** Procédé selon l'une quelconque des revendications 7 à 9, dans lequel : dans lequel les première et seconde compositions sont identiques l'une à l'autre ; (ii) la première et/ou la seconde composition sont des compositions durcissables choisies indépendamment ; ou (iii) à la fois (i) et (ii).

**11.** Procédé selon l'une quelconque revendication précédente, dans lequel (III) est réalisé : (i) simultanément avec et/ou après (I) et (II), mais avant la répétition éventuelle de (I) et (II) ; (ii) après la répétition de (I) et (II) avec des compositions choisies indépendamment ; ou (iii) à la fois (i) et (ii).

**12.** Procédé selon l'une quelconque revendication précédente, dans lequel la condition de solidification est choisie parmi : (i) une exposition à l'humidité ; (ii) une exposition à la chaleur ; (iii) une exposition à l'irradiation ; (iv) une réduction de température ambiante ; (v) une exposition au solvant ; (vi) une exposition à une vibration mécanique ; (vii) une exposition à l'oxygène ; ou (viii) une combinaison de (i) à (vi).

**13.** Procédé selon l'une quelconque revendication précédente, dans lequel : (i) l'appareil comprend une imprimante 3D ; ou (ii) l'appareil comprend une imprimante 3D choisie parmi une imprimante de fabrication de filament fondu, une imprimante de modélisation par dépôt fondu, une imprimante de dépôt direct d'encre, une imprimante de production additive liquide, une imprimante à jet de matière, une imprimante polyjet, une imprimante à jet de matière et une imprimante d'extrusion à seringue.

Fig - 1

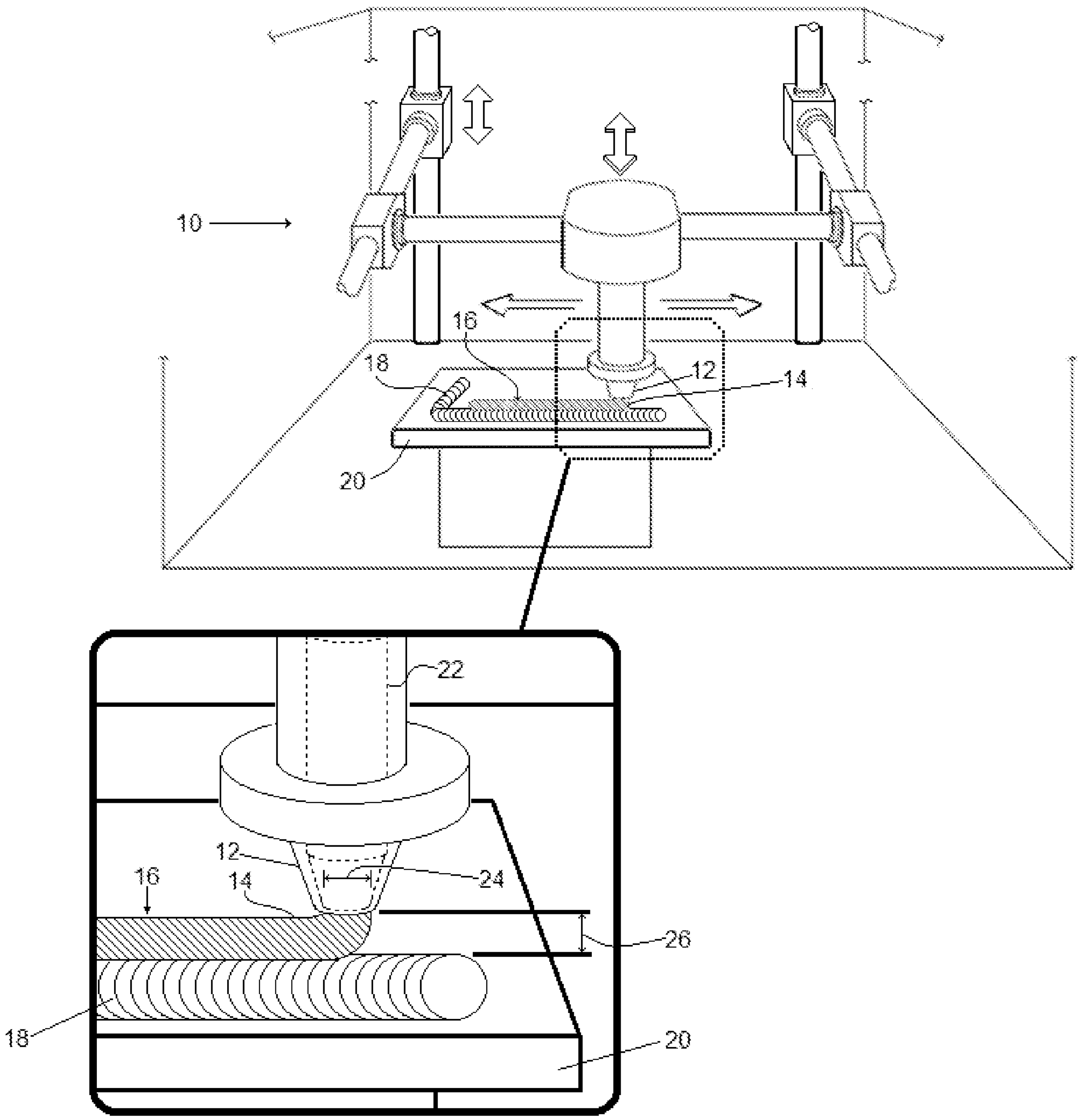

Fig – 2A

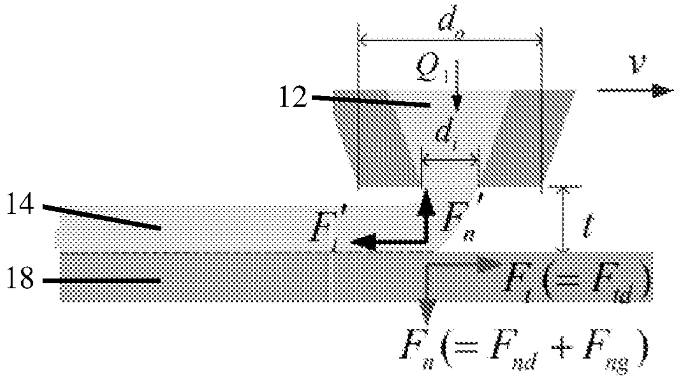


Fig – 2B

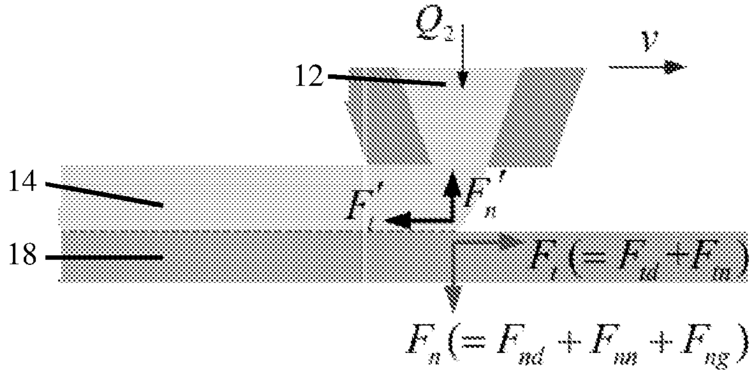


Fig – 2C

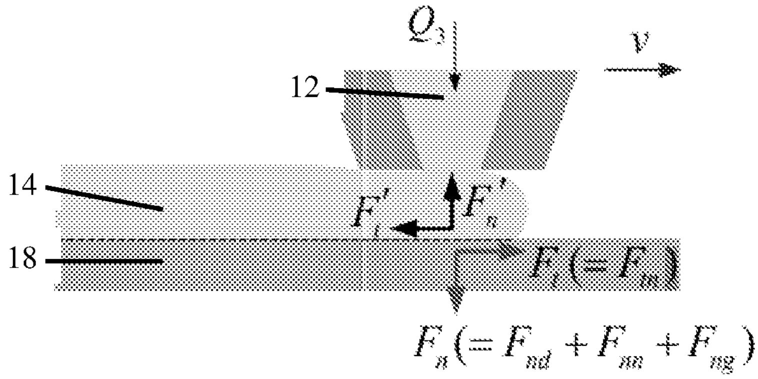


Fig – 2D

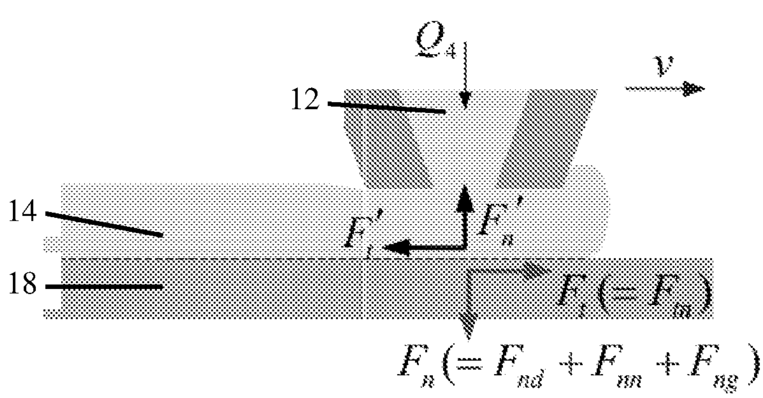

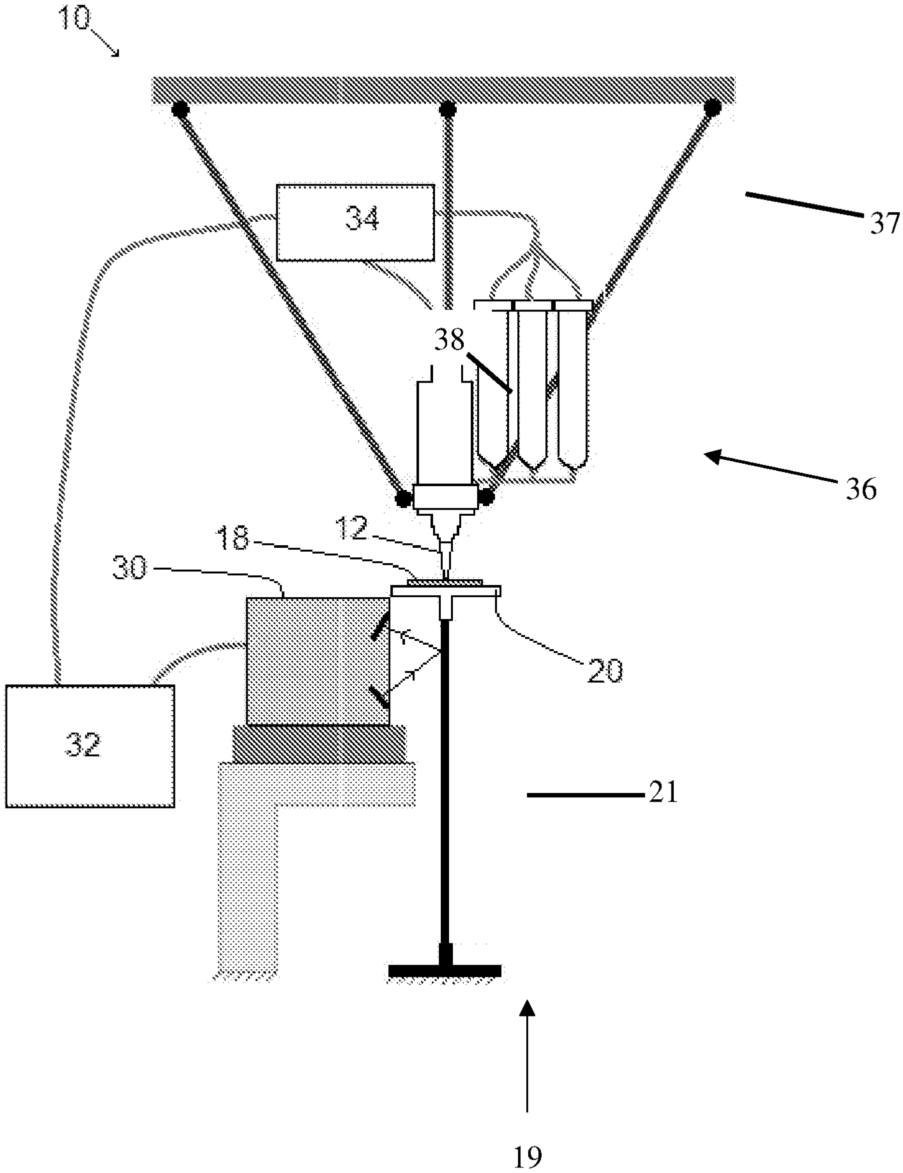


Fig - 3

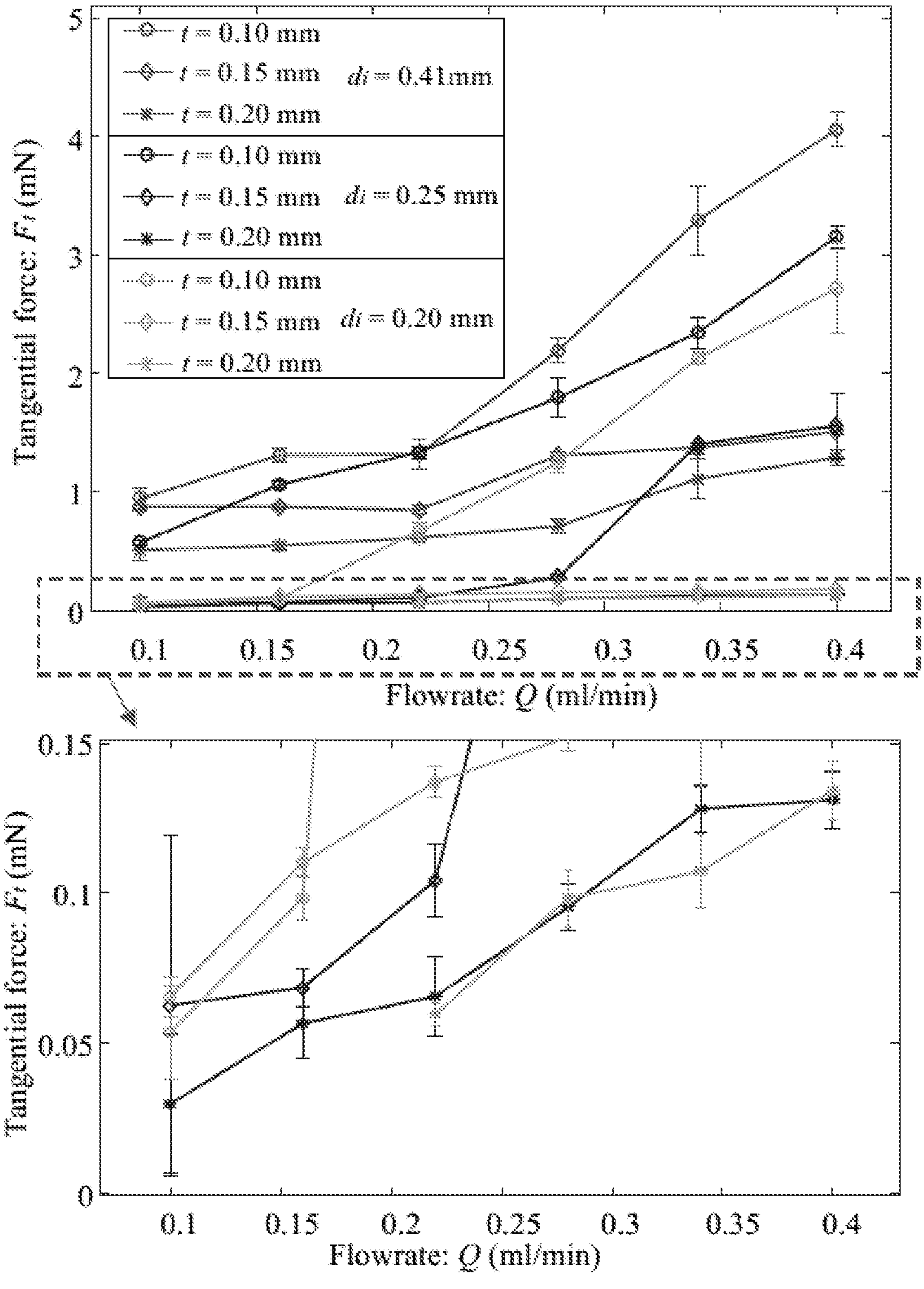

t = 0.10 mm
t = 0.15 mm
t = 0.20 mm
di = 0.41mm
t = 0.10 mm
t = 0.15 mm
t = 0.20 mm
di = 0.25 mm
t = 0.10 mm
t = 0.15 mm
t = 0.20 mm
di = 0.20 mm
Tangential force: Ft (mN)
Flowrate: Q (ml/min)
0
1
2
3
4
5
0.1
0.15
0.2
0.25
0.3
0.35
0.4
Tangential force: Ft (mN)
Flowrate: Q (ml/min)
0
0.05
0.1
0.15
0.1
0.15
0.2
0.25
0.3
0.35
0.4


Fig - 4

**Fig - 5**

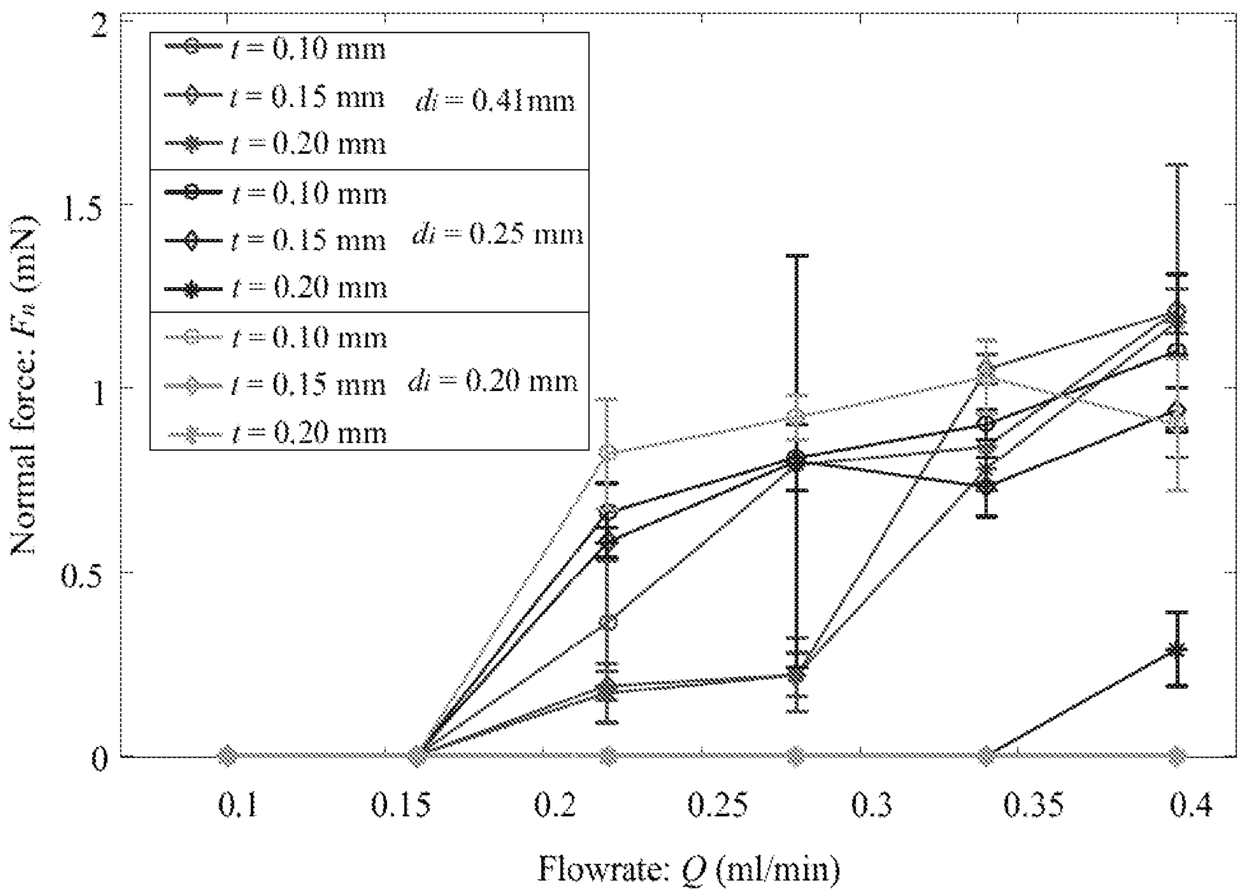

t = 0.10 mm
t = 0.15 mm
t = 0.20 mm
di = 0.41mm
t = 0.10 mm
t = 0.15 mm
t = 0.20 mm
di = 0.25 mm
t = 0.10 mm
t = 0.15 mm
t = 0.20 mm
di = 0.20 mm
Normal force: Fn (mN)
0
0.5
1
1.5
2
0.1
0.15
0.2
0.25
0.3
0.35
0.4
Flowrate: Q (ml/min)

**Fig – 6**

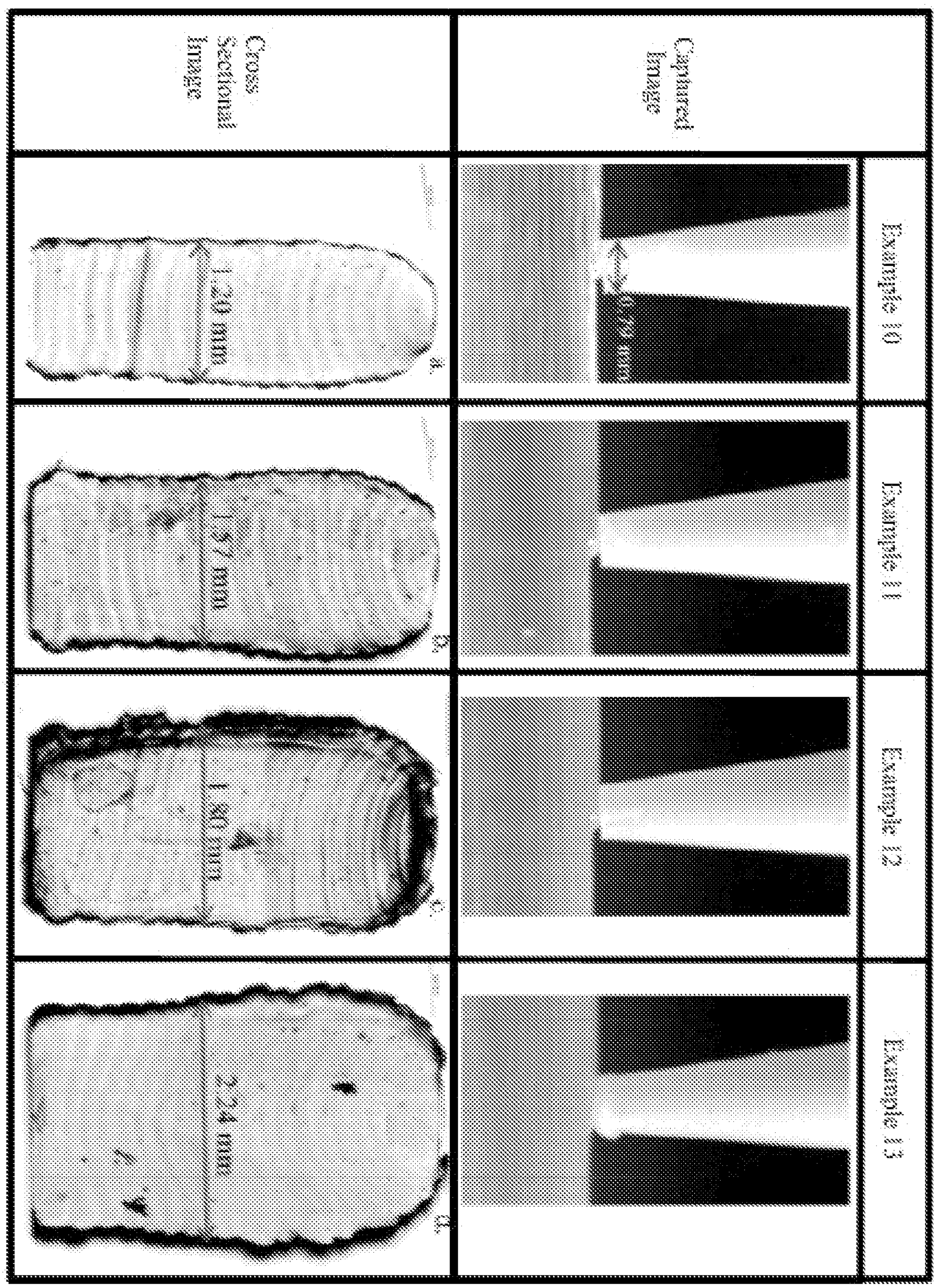
Captured Image
Cross Sectional Image
Example 10
Example 11
Example 12
Example 13
1.20 mm
1.57 mm
1.80 mm
2.24 mm

**Fig – 7**

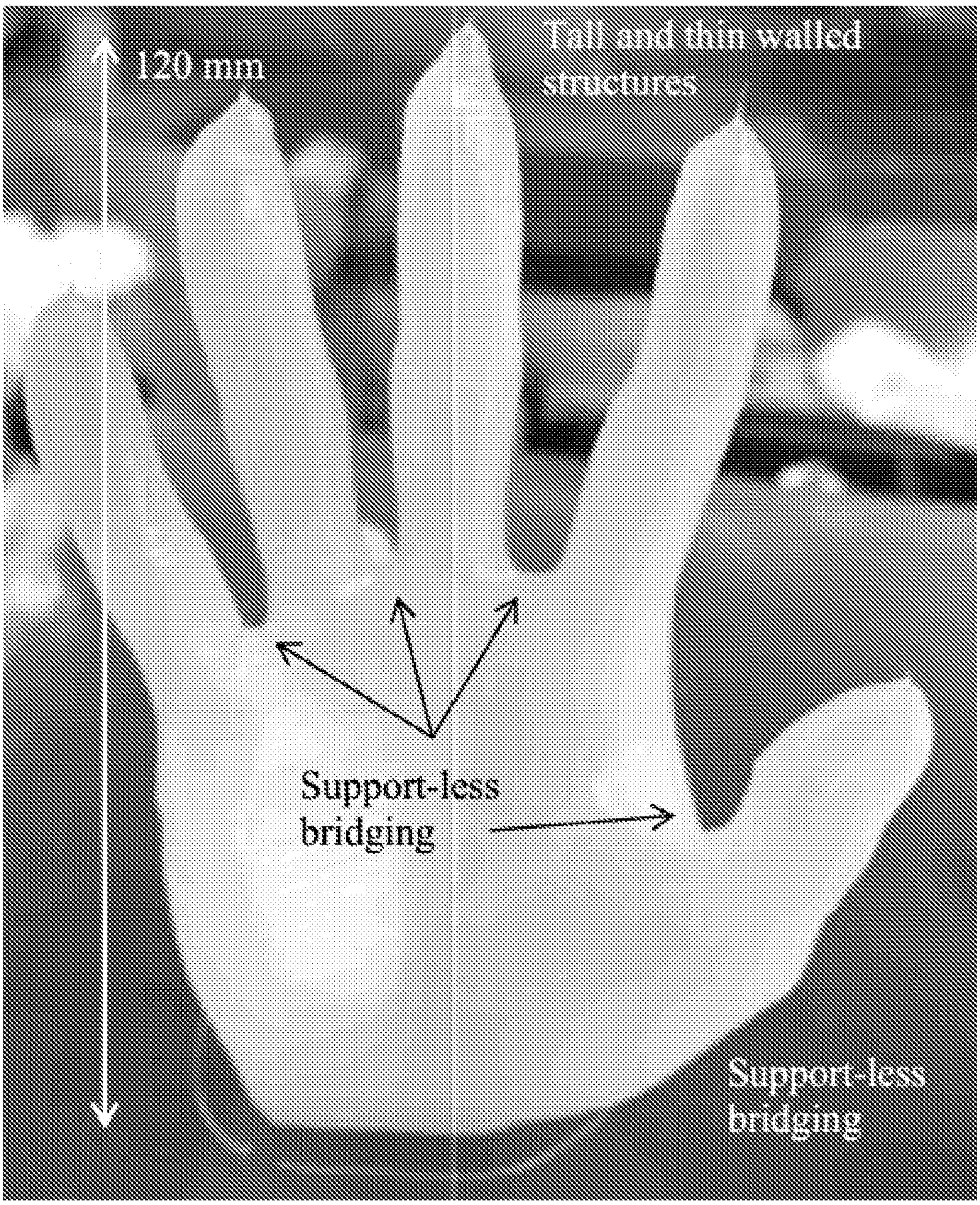
120 mm
Tall and thin walled structures
Support-less bridging
Support-less bridging

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62669474
- US 2017052516 A1
- WO 2018013372 A1
- US 5204055 A
- US 5387380 A
- US 3419593 A
- US 4766176 A
- US 5017654 A


### Non-patent literature cited in the description


- Standard Test Method for Kinematic Viscosity of Transparent and Opaque Liquids (and Calculation of Dynamic Viscosity). *ASTM D-445*, 2011
- Standard Test Method for Determination of Dynamic Viscosity and Derived Kinematic Viscosity of Liquids by Oscillating Piston Viscometer;. *ASTM D-7483*, 2017
- Standard Test Method for Determination of Dynamic Viscosity and Derived Kinematic Viscosity of Liquids by Constant Pressure Viscometer;. *ASTM D-7945*, 2016
- Standard Test Method for Dynamic Viscosity and Density of Liquids by Stabinger Viscometer (and the Calculation of Kinematic Viscosity);. *ASTM D7042*, 2016
- Standard Test Method for Tensile Properties of Plastics. *ASTM D638*, 2014